(19) **Europäisches Patentamt / European Patent Office / Office européen des brevets**

(11) **EP 2 777 304 B1**

(12) **EUROPEAN PATENT SPECIFICATION**

(45) Date of publication and mention
of the grant of the patent:
**28.12.2016 Bulletin 2016/52**

(21) Application number: **11875431.6**

(22) Date of filing: **08.11.2011**

(51) Int Cl.:
*H04W 4/02* (2009.01)    *G01S 5/02* (2006.01)

(86) International application number:
**PCT/SG2011/000397**

(87) International publication number:
**WO 2013/070170 (16.05.2013 Gazette 2013/20)**

(54) **A METHOD AND APPARATUS FOR DETERMINING LOCATION INFORMATION OF A POSITION IN A MULTI-STOREY BUILDING**

VERFAHREN UND VORRICHTUNG ZUR BESTIMMUNG VON STANDORTINFORMATIONEN IN EINEM GEBÄUDE MIT MEHREREN STOCKWERKEN

PROCÉDÉ ET APPAREIL POUR DÉTERMINER DES DONNÉES DE LOCALISATION D'UNE POSITION DANS UN IMMEUBLE À PLUSIEURS ÉTAGES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.09.2014 Bulletin 2014/38**

(73) Proprietor: **Ruckus Wireless, Inc.
Sunnyvale, CA 94089 (US)**

(72) Inventors:
• **HAN, Yang
Singapore 640644 (SG)**
• **TING, See Ho
Singapore 507027 (SG)**

(74) Representative: **Lucas, Brian Ronald
Lucas & Co.
135 Westhall Road
Warlingham, Surrey CR6 9HJ (GB)**

(56) References cited:
**WO-A2-2011/129617     US-A1- 2004 162 084
US-A1- 2008 026 770     US-A1- 2010 008 337
US-A1- 2010 026 513     US-A1- 2010 120 422
US-B1- 6 664 925**

• **BAHL P ET AL: "A software system for locating mobile users: design, evaluation and lessons", INTERNET CITATION, April 2000 (2000-04), XP002967193, Retrieved from the Internet: URL:http://citeseer.nj.nec.com/296401.html [retrieved on 2000-04-01]**

**Description**

**FIELD OF THE INVENTION**

The present invention relates to a method for determining location information of a position in a multi-storey building.

**BACKGROUND**

Location-based applications and services have been gaining popularity over the recent years with the widespread availability of Global Positioning System (GPS) functions in mobile devices, especially in smartphones. However, the low-cost solution with accurate positioning and convenience of the GPS functions are lost once the mobile device moves indoors into a building because when indoors, the GPS satellite signals becomes undetectable.

In today's cities where people spend a great amount of time indoors, such as in shopping malls, airports, office buildings, hospitals and industrial plants, there is a need for an extension of positioning capabilities for indoors. Having accurate indoors positioning capabilities can allow companies to improve their indoor workflows, processes, security management, assets and people tracking, customer satisfaction and carry out perhaps many other innovative ideas presently not thought of.

Although there are a number of indoor wireless positioning solutions available on the market, most of them require the deployment of dedicated equipment, making them too expensive for mass-market implementation.

The article "A software system for locating mobile users: design, evaluation and lessons" by Bahl P; et al, Microsoft Research, April 2000, discloses a software system for locating mobile users inside a building and using an already deployed wireless local area network. The system estimates the location of the mobile user by comparing signal strengths measured at the mobile to a preestablished radio map of the building.

**SUMMARY**

According to one aspect of the present invention, there is provided a method for determining location information of a position in a multi-storey building, the method comprising: retrieving observation data comprising observed addresses and corresponding observed received signal strengths of wireless access points detected at the position from a memory; retrieving, for each storey of the building, a radio map comprising a plurality of location points in the respective storey of the building from a database, each location point comprising addresses and corresponding mean received signal strengths of wireless access points detected at the location point and coordinates of the location point; selecting one or more location points comprising the observed addresses from the radio map; determining a storey estimate of the position by calculating a sum probability for each storey of the building, the sum probability being calculated by summing all individual probabilities of each observed address contained in each selected location point in the radio map of the respective storey being detected on the respective storey; and setting the storey estimate as the storey of the building having highest value of the calculated sum probability, wherein each of said individual probabilities is calculated based on the corresponding observed received signal strength of said each observed address in said each selected location point and the corresponding mean received signal strength in said each selected location point containing said each observed address.

The method may further comprise determining a position estimate of the position based on weighted average values of coordinates of every selected location point containing said each observed address in the radio map of the estimated storey.

The selected one or more location points may be selected from a filtered region of interest in the radio map in the step of selecting one or more location points comprising the observed addresses from the radio map.

The method may further comprise extracting a number of observed addresses with corresponding received signal strengths above a predetermined value.

The observed addresses that are not extracted may be removed from the selected one or more location points.

The region of interest in the radio map may be filtered based on vicinity of a previous position in a multi-storey building.

The step of determining a storey estimate of the position may comprise calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address; calculating the first value for each one of the selected location points; summing up first values calculated for the selected location points in the radio map of one storey, wherein said selected location points all contain a common observed address, to get a second value; and calculating the second value for every observed address that is common; summing up second values calculated for each storey of the building to get a third value; and selecting the largest third value as the storey estimate.

The method may further comprise selecting the observed addresses with variance of detected received signal strengths that is beyond a predetermined variance from the radio map of each storey in the building; and in the step of selecting one or more location points comprising the observed addresses from the radio map, selecting the one or more location points comprising the selected observed addresses with variance of detected received signal strengths that is beyond the predetermined variance.

The method may further comprise receiving observation data wirelessly from a mobile device located at the position in the building, the observation data comprising observed addresses and corresponding observed received signal strengths of wireless access points detected by the mobile device at the position.

The method may further comprise detecting observation data at the position, the observation data comprising observed addresses and corresponding observed received signal strengths of wireless access points detected.

The method may further comprise repeating said step of determining the storey estimate a predetermined number of times based on more than one observation data to collect more than one preliminary storey estimate; and selecting as the storey estimate the same storey having the largest third value in the predetermined number of times.

According to another aspect of the present invention, there is provided an apparatus comprising: a memory for storing observation data comprising observed addresses and corresponding observed received signal strengths of wireless access points detected at the position; a database for storing, for each storey in the building, a radio map comprising a plurality of location points in the respective storey of the building, each location point comprising addresses and mean corresponding received signal strengths of wireless access points detected at the location point and coordinates of the location point; and a processing unit for selecting one or more location points comprising the observed addresses from the radio map; the processing unit being configured for determining a storey estimate of the position by calculating a sum probability for each storey of the building, the sum probability being calculated by summing all individual probabilities of each observed address contained in each selected location point in the radio map of the respective storey being detected on the respective storey, and setting the storey estimate as the storey of the building having highest value of the calculated sum probability, wherein each of said individual probabilities is calculated based on the corresponding observed received signal strength of said each observed address in said each selected location point and the corresponding mean received signal strength in said each selected location point containing said each observed address.

The processing unit may be further configured for determining a position estimate of the position based on weighted average values of coordinates of every selected location point containing said each observed address in the radio map of the estimated storey.

The selected one or more location points may be selected from a filtered region of interest in the radio map in the step of selecting one or more location points comprising the observed addresses from the radio map.

The processing unit may be further configured for extracting a number of observed addresses with corresponding received signal strengths above a predetermined value.

The observed addresses that are not extracted may be removed from the selected one or more location points.

The region of interest in the radio map may be filtered based on vicinity of a previous position in a multi-storey building.

The step of determining a storey estimate of the position may comprise calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address; calculating the first value for each one of the selected location points; summing up first values calculated for the selected location points in the radio map of one storey, wherein said selected location points all contain a common observed address, to get a second value; calculating the second value for every observed address that is common; summing up second values calculated for each storey of the building to get a third value; and selecting the largest third value as the storey estimate.

The processing unit may be further configured for selecting the observed addresses with variance of detected received signal strengths that is beyond a predetermined variance from the radio map of each storey in the building; and in the step of selecting one or more location points comprising the observed addresses from the radio map, selecting the one or more location points comprising the selected observed addresses with variance of detected received signal strengths that is beyond the predetermined variance.

The apparatus may comprise a receiver for receiving the observation data wirelessly from a mobile device located at the position in the building.

The apparatus may comprise a detector for detecting the observation data from the position.

The processing unit may be further configured for repeating said step of determining the storey estimate a predetermined number of times based on more than one observation data to collect more than one preliminary storey estimate; and selecting as the storey estimate the same storey having the largest third value in the predetermined number of times.

## BRIEF DESCRIPTION OF THE DRAWINGS

Embodiments of the invention will be better understood and readily apparent to one of ordinary skill in the art from the following written description, by way of example only and in conjunction with the drawings, in which:

Figure 1 shows a schematic diagram of an application of an indoor positioning system.

Figure 2 shows a floor plan representing a Radio Map of a floor of a multi-storey building.

Figure 3 shows a plurality of tables containing data of Calibration Points of the system.

Figure 4 shows a flowchart for generating a Radio Map of a multi-storey building.

Figure 5 shows a table containing data of an Observation Matrix (OM) of the system.

Figure 6 shows a table containing data of a Floor Discrimination Metric Table (FDMT) of the system.

Figure 7 shows a flowchart of the operation of the indoor positioning system.

Figure 8 shows a flowchart of a floor selection subroutine of the system.

Figure 9 shows a flowchart of a floor selection algorithm of the system.

Figure 10 shows a flowchart for calculating probability of an access point being observed on a floor of the multi-storey building.

Figure 11 shows a flowchart of a first part of a Region of Interest (ROI) subroutine of the system.

Figure 12 shows a flowchart of a second part of a Region of Interest (ROI) subroutine of the system.

Figure 13 shows a table containing data relating to a selected list of wireless access points.

Figure 14 shows tables containing data of Calibration Points of the system.

Figure 15 shows a flowchart of a position estimate subroutine of the system.

Figure 16 shows a schematic diagram of a database server of the system.

Figure 17 shows a schematic diagram of components of the system.

Figure 18 shows a flowchart of an operation of an indoor positioning system.

## DETAILED DESCRIPTION

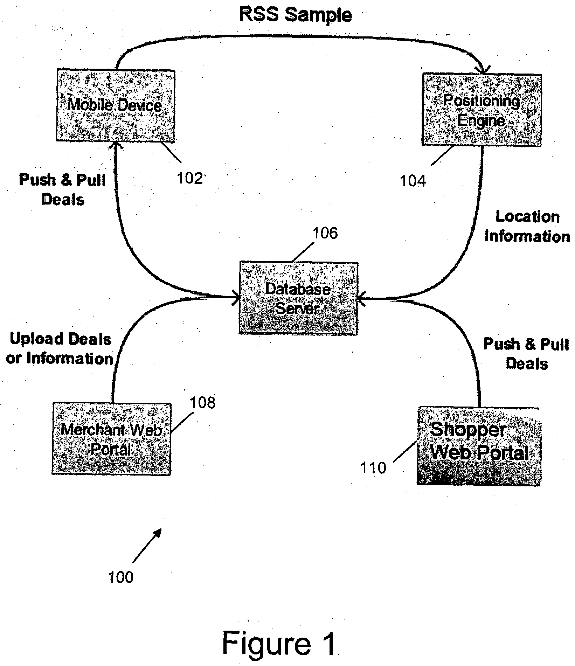

In Figure 1, there is provided a system 100, which includes a mobile device 102, a positioning engine 104, a database server 106, a merchant web portal 108 and a shopper web portal 110.

Operation of the system 100 is as follows.

Client based software implemented in the form of a mobile application is firstly downloaded and installed by a user on the mobile device 102 via a telecommunication link such as a Third Generation (3G) telecommunication network, a General Packet Radio Service (GPRS) data link and the like ("telecommunication link"). The mobile device 102 could be a Wireless Fidelity (WiFi) enabled smart phone, touchscreen tablet, computer notebook, computer netbook and the like. The mobile application is configured to exchange data with the database server 106 and the positioning engine 104. The mobile application is used for detecting position of the mobile device 102 inside a building.

When activated at any location in the building, the mobile application makes use of a WiFi interface of the mobile device 102 to extract Received Signal Strength (RSS) Indicator values of all visible surrounding WiFi access points. An access point (also known as wireless access point) is visible to the mobile device 102 if its WiFi signals can be detected by the mobile device 102. Each access point is indicated by a Media Access Control (MAC) address and has an RSS value denoting the signal strength of the access point as picked up by the mobile device 102.

The RSS value and the MAC address of each detected access point are tabulated. The table of RSS values and corresponding Media Access Control (MAC) addresses of the access points is then transmitted to the Positioning engine 104. The transmission is done via a telecommunication link. Upon receiving the MAC and RSS values from the mobile device 102, the positioning engine 104 will calculate an estimated indoor location of the mobile device 102 and send the location information to the database server 106. The indoor location of the mobile device 102 includes the floor of the building it is on and the position estimate of the mobile device 102 on that floor.

After the database server 106 receives the estimated indoor location of the mobile device 102, the database server 106 may push advertising/marketing information to the mobile device 102 via a telecommunication link according to the estimated indoor location, time, user's preset preferences and business logic determined by merchants. It is appreciated that besides pushing advertising/marketing information to the mobile device 102, other types of information can be pushed/extracted from the mobile device 102, or actions can take place after the database server 106 receives the estimated indoor location of the mobile device 102.

In the system 100, the merchant web portal 108 allows each merchant to create his/her own personal accounts. Through the personal accounts, each merchant will be able to upload and publish their advertising/marketing materials in real-time. In addition, the merchant will be able to set the business logic to be used for pushing their deals and download the analytics on the number of impressions served, number of clicks, footfall etc.

The shopper web portal 110 provides information and services also available in the mobile application on a web page. Through the web page, a user will be able to create a personal account and select his/her shopping preferences that will affect the types of advertising/marketing materials to be sent to him/her. In the shopper web portal 110, the user will also be able to maintain a microblog.

Advantageously, the system 100 provides an indoor positioning and navigation technology that taps on existing WiFi networks already installed in most modern buildings. Minimum resource is deployed in this instance, that is, the database server 106 and the positioning engine 104 are required for predicting the position estimate of the mobile device (102 in Figure 1). Cost is kept low and the technology is more scalable and accessible for the mass-market and industries.

It is appreciated that although the merchant web portal 108 and the shopper web portal have been described, the indoor positioning aspect of the system 100 is generic and can be used in other areas such as for people/asset tracking or in awareness interactive multimedia applications and services. Examples of application areas for the indoor positioning aspect of the system 100 are as follows.

- For tracking people and assets for enterprises, such as hospitals, airports, shopping malls and office buildings.
- To serve purely as a backbone indoor positioning and navigation engine for mobile device application developers to create location-based applications.
- To serve as the underlying technology for the implementation of a mobile marketing platform for mega shopping malls, with full navigational capabilities and intelligent pushing of advertisements based on time, location and shopper's preferences.

Details of the indoor positioning aspect of the system 100 are described as follows.

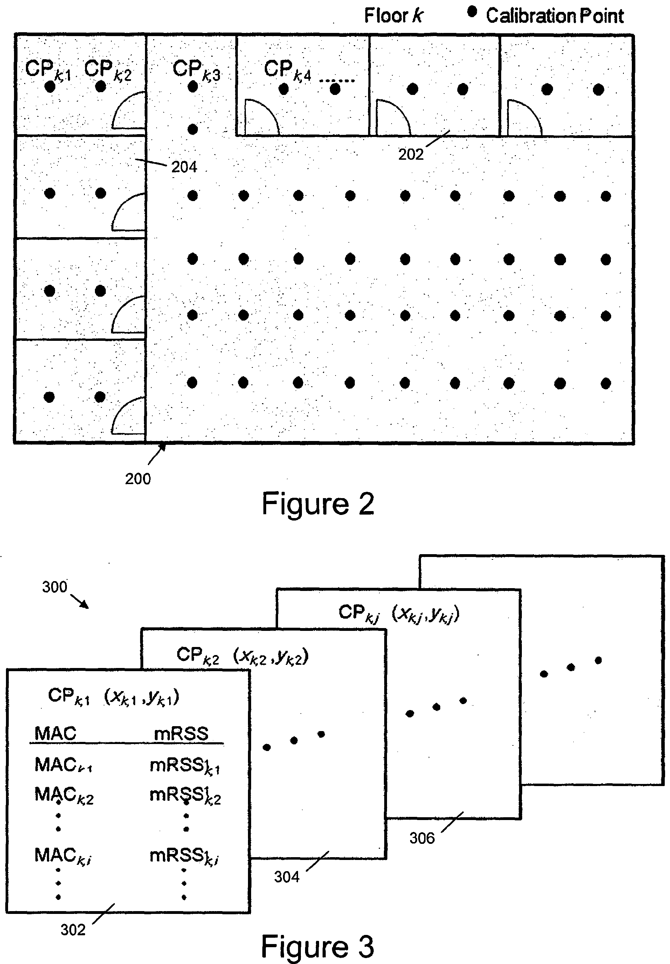

In Figure 2, there is provided a rectangular top view floor plan 200 of an arbitrary floor or storey, $k$, in a subject multi-storey building. For a system such as system 100 described as in Figure 1 to function for the building, each floor or storey of the building would require a Radio Map (RM). It is noted that in the present specification, the words 'floor' and 'storey' have the same meaning and are used interchangeably.

Figure 2 illustrates conceptually a radio map for the arbitrary $k$th floor, $RM_k$. In practice, each radio map contains data of a list of calibration points for a specific floor of the building. The data of every radio map is stored in the database server (106 in Figure 1) and is used for locating the mobile device (102 in Figure 1) in the building.

The $RM_k$ is created by determining the list of calibration points on the $k$th floor through onsite measurements with a measuring device. The measuring device could be a WiFi enabled smart phone, touchscreen tablet, computer notebook, computer netbook and the like.

Each calibration point (CP) is characterized by the following information:

1) XY co-ordinates with respect to horizontal (X) and vertical (Y) axes of the floor plan 200 indicating the physical location of the selected CP in the form (x, y).

2) A list of MAC addresses of WiFi access points detected during the onsite measurements at the location of the CP and a list of mean Received Signal Strength values, mRSS associated with the MAC addresses. It is noted that each MAC address would only have one corresponding mRSS value. Each of the mRSS values is calculated by averaging a few measurements of received signal strength values detected by the measuring device.

The choice of the position of the calibration points is determined based on, for instance,

i) accuracy of the location information required of the mobile device 102,
ii) complexity of the environment and
iii) physical layout.

In relation to i), generally, the closer the calibration points are together the better the accuracy of the radio map for purposes of locating the position of the mobile device 102 in the radio map of the arbitrary $k$th floor. However, it is noted that if the calibration points are too close, calibration time and cost are increased without improvement to the positioning accuracy.

For ii), while it may be better to evenly distribute calibration points in the radio map with equal distances from each other to ease computation of the position of the mobile device 102, there are times that even distribution may not provide the desired accuracy in the computation due to environmental factors, for instance, proximity to a source of WiFi signal interference. In such cases, even distribution of the calibration points is not possible.

With regard to iii), physical layout such as location of building walls and floor design also affects the placement of the calibration points.

An example range of the distance between calibration points is 2 to 5 metres.

In Figure 2, there are 7 rooms arranged along the rectangular sides of the floor plan 200. 3 rooms 202 are horizontally arranged and 4 rooms 204 are vertically arranged in the floor plan. Due to obstruction by the walls of the rooms, the calibration points are selected such that they are evenly distributed inside and outside the rooms.

Figure 3 illustrates conceptually the multi-dimensional format of data in an $RM_k$ 300. The $RM_k$ 300 contains a list of calibration points, i.e. $CP_{k,1}$ 302 with coordinates $(x_{k,1}, y_{k,1})$, $CP_{k,2}$ 304 with coordinates $(x_{k,2}, y_{k,2})$, ... $CP_{k,j}$ 306 with coordinates $(x_{k,j}, y_{k,j})$ for the arbitrary $k$th floor. $CP_{k,1}$ in turn contains a list of detected WiFi access points $MAC_{k,1}$, $MAC_{k,2}$, ... $MAC_{k,i}$ and the corresponding $mRSS_{k,1}$, $mRSS_{k,2}$, ... $mRSS_{k,i}$ measured at coordinate $(x_{k,1}, y_{k,1})$. It is noted that $k$ is indicative of the building floor and $j$ denotes which Calibration Point in the Radio Map.

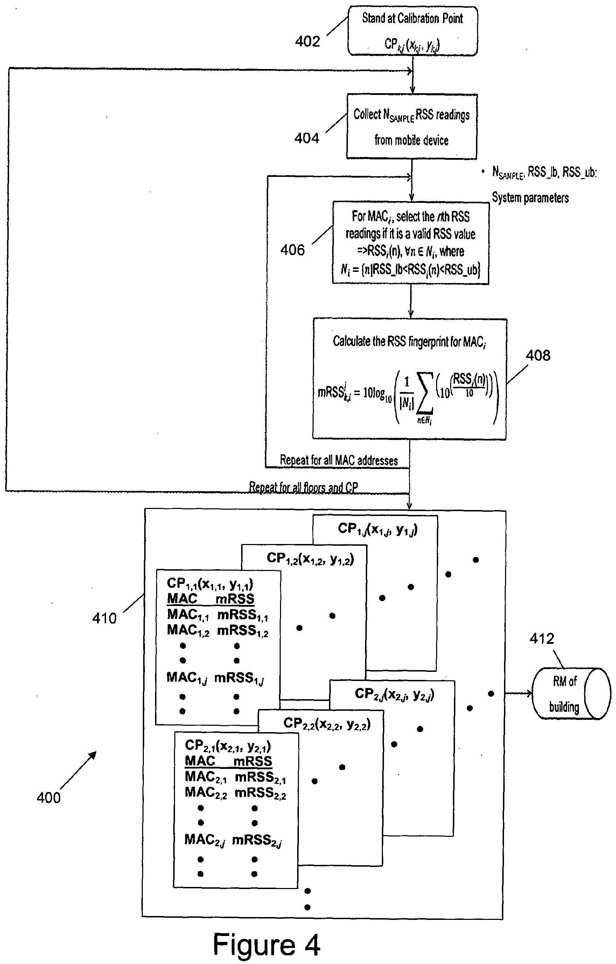

Figure 4 illustrates a measurement procedure 400 to get the Radio Map of the multi-storey building 412. The Radio Map of the multi-storey building 412 includes a Radio Map for each floor 410.

At step 402, a person performing the measurement procedure holds a measuring mobile device and stands at a pre-determined Calibration Point, $CP_{k,j}(x_{k,j}, y_{k,j})$.

At step 404, a predetermined $N$ number of samples of RSS readings, $N_{SAMPLE}$, is collected from the measuring mobile device for each MAC address detected. It is noted that each MAC address is linked to an access point. $N_{SAMPLE}$ is a value selected based on the variance of WiFi signals in the specific environment. It could be in the range of, for instance, 10 to 100 depending on how large the variance of the WiFi signals are and the sampling rate achievable by the hardware of the measuring mobile device. Generally, the larger the variance, the more the samples of RSS readings are required (i.e. higher $N_{SAMPLE}$). The variance of the WiFi signals could be calculated, for instance, by collecting samples of WiFi signals in the specific environment, calculating the mean WiFi signal from data of the samples collected and applying standard variance formulas of the probability theory.

At step 406, a set of predetermined $n$th number of RSS readings is selected from the collected $N_{SAMPLE}$ for a particular MAC address, $MAC_i$, detected by the measuring mobile device at step 404. This set of predetermined $n$th number of RSS readings is denoted by the expression, $RSS_i(n)$, and $i$ denotes which particular MAC address.

An RSS reading is selected for the set, $RSS_i(n)$, only if it is deemed to be a valid RSS value. An RSS value is deemed valid only if it is greater than a predetermined RSS lower limit value, RSS_lb, and lower than a predetermined RSS upper limit value, RSS_ub. An RSS reading of a MAC address below RSS_lb is considered to be too weak to be used for locating the position of the mobile device (102 in Figure 1) in the building. Conversely, an RSS reading of a MAC address above RSS_ub is considered to be too strong to be used for locating the position of the mobile device (102 in Figure 1) in the building.

Hence, $RSS_i(n)$ is a set of RSS values for all (i.e. $\forall$) instances where $n$ is an element of (i.e. $\in$) $N_i$, where $N_i$ is a set of all $n$ values when $RSS_i(n)$ fulfils the condition of RSS_lb < $RSS_i(n)$ < RSS_ub. Mathematically, the relationship can be represented as follows.

$$RSS_i(n), \forall\, n \in N_i,\ \text{where } N_i = \{\, n \mid \text{RSS\_lb} < RSS_i(n) < \text{RSS\_ub}\}$$

At step 408, the calculated $RSS_i(n)$ and $N_i$ values in step 406 for a particular MAC address, $MAC_i$, detected at a Calibration Point, $CP_j$, in a Radio Map for floor $k$, $RM_k$, are used to calculate an RSS fingerprint or in other words a mean Received Signal Strength value, mRSS, according to the following formula.

$$mRSS_{k,i}^{j} = 10 \log_{10} \left\{ \frac{1}{|N_i|} \sum_{n \in N_i} \left[ 10^{\left(\frac{RSS_i(n)}{10}\right)} \right] \right\}$$ (Unit: dBm)

In mathematical terms, the formula above converts all the collected RSS values i.e. $RSS_i(n)$ as and when they are collected from logarithm domain into linear domain. It also calculates the arithmetic mean of the collected RSS values in the linear domain and converts the calculated arithmetic mean value back into the logarithm domain. The averaging for the mean value calculation has to be done in the linear domain because the mean value in logarithm domain does not have a physical meaning.

Steps 406 and 408 are repeated to acquire the mRSS values for all MAC addresses detected by the measuring mobile device for a particular Calibration Point in a radio map of a particular floor.

Steps 402, 404, 406 and 408 are repeated for all floors and for all Calibration Points in the radio map of each floor to gather all the data to form the Radio Map of the multi-storey building 412.

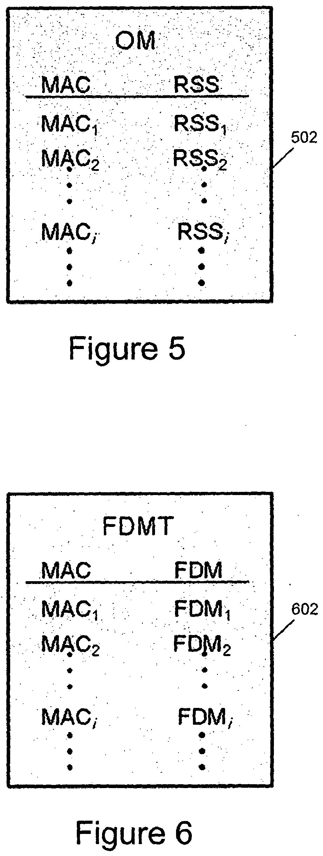

With reference to Figure 5, whenever the mobile application described with reference to Figure 1 is activated by a user to locate the position of the mobile device (102 in Figure 1), the mobile device (102 in Figure 1) will be instructed by the mobile application to scan the surroundings to acquire data for the construction of an Observation Matrix (OM) 502. The OM 502 contains a list of all the MAC addresses and Received Signal Strengths (RSS) of the WiFi access points detected during the scan. The OM 502 constructed in this manner would be representative of the position of the mobile device (102 in Figure 1) and can be used to predict the position of the mobile device (102 in Figure 1). It is noted that unlike a Calibration point (CP), the RSS value in the OM 502 is not a mean value.

After the OM 502 is constructed, it would be sent to the database server (106 in Figure 1) for further processing. The OM 502 could be constructed by the mobile device (102 in Figure 1) on request by the database server (106 in Figure 1).

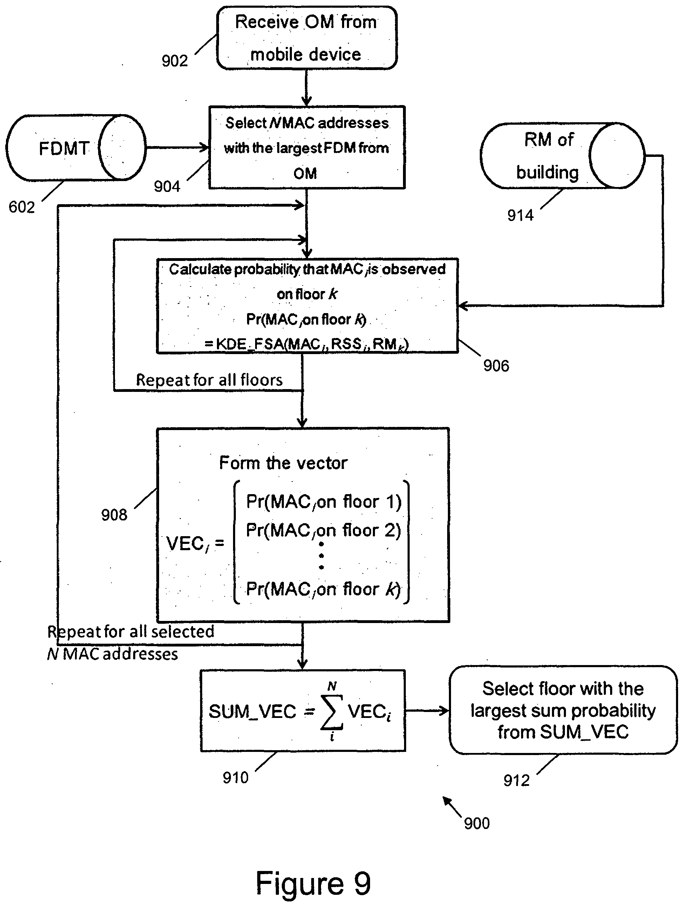

Figure 6 illustrates a Floor Discrimination Metric Table (FDMT) 602. The FDMT 602 is used in a Floor Selection Algorithm (900 in Figure 9) for detecting the floor on which the mobile device (102 in Figure 1) is located when the mobile application described previously is executed to locate the position of the mobile device (102 in Figure 1). The FDMT 602 contains all the MAC addresses present in all radio maps constructed for each floor of the subject multi-storey building. Corresponding to each MAC address is a Floor Discrimination Metric value (FDM). The FDM is calculated as follows.

$$FDM_i = \frac{(variance\ of\ RSS\ for\ a\ specific\ MAC_i\ across\ all\ floors)}{\sum_{k}^{n}(variance\ of\ RSS\ for\ the\ specific\ MAC_i\ in\ Floor\ k)}$$

i.e.

$$FDM_i = \frac{\frac{1}{\sum_{k=1}^{n} q_k} \sum_{k=1}^{n} \sum_{j=1}^{q_k} (mRSS_{k,i}^{j} - MRSS_i)^2}{\sum_{k=1}^{n} \frac{1}{q_k} \sum_{j=1}^{q_k} (mRSS_{k,i}^{j} - MRSS_{k,i})^2}$$

where k is indicative of a specific floor in the building,
$n$ is the number of floors in the multi-storey building, and

$$\sum_{k}^{n} (variance\ of\ RSS\ for\ the\ specific\ MAC_i\ in\ Floor\ k)$$

is the sum of individual variances of the specific $MAC_i$ in each floor in the multi-storey building.

$q_k$ is the number of Calibration Points in Floor $k$.
MRSS $_{k,i}$ is the mean of the RSS of a specific $MAC_i$ in floor $k$
i.e.

$$MRSS_{k,i} = \frac{1}{q_k} \sum_{j=1}^{q_k} mRSS_{k,i}^j$$

MRSS$_i$ is the mean of th RSS of a specific MAC$_i$ across all floors

i.e.

$$MRSS_i = \frac{1}{n} \sum_{k=1}^{n} MRSS_{k,i}$$

Variance of the RSS for the specific MAC$_i$ in floor $k$ is thus represented as

$$\frac{1}{q_k} \sum_{j=1}^{q_k} \left( mRSS_{k,i}^j - MRSS_{k,i} \right)^2$$

and the variance of the RSS for the specific MAC$_i$ across all floors, FDM$_i$, is represented by the formula above.

The numerator of FDM$_i$ i.e. variance of RSS for MAC$_i$ across all floors indicates how different is the RSS received from the MAC$_i$ at different floors. The greater the difference, the better is MAC$_i$'s floor discrimination ability. The denominator of FDM$_i$ is for normalization purposes.

Hence, based on the formula, the FDM value for a specific MAC address is basically an indication of how well the device of the specific MAC address is able to tell the floor on which the mobile device (102 in Figure 1) is located when the mobile application described previously is executed to locate the position of the mobile device (102 in Figure 1). In the present instance, the higher the FDM value of a specific MAC address, the better indicator it is.

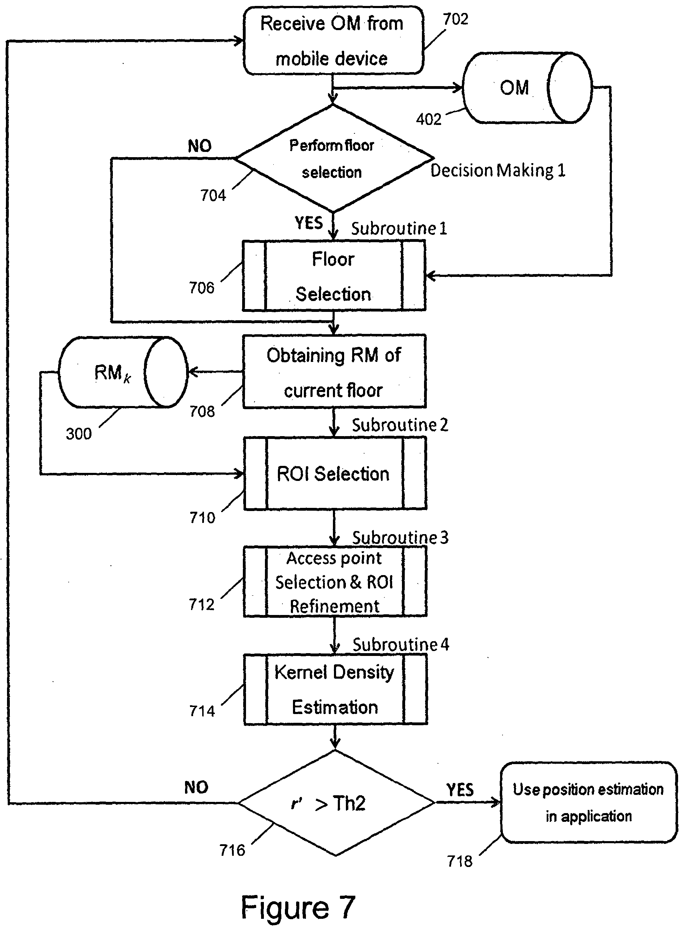

Figure 7 shows in detail a main flowchart 700 of a main application running on the database server (106 in Figure 1) to locate the position of the mobile device (102 in Figure 1).

At step 702, an OM (e.g. 502 in Figure 5) is received by the database server (106 in Figure 1) from the mobile device (102 in Figure 1) requesting for information on its location via a telecommunication link.

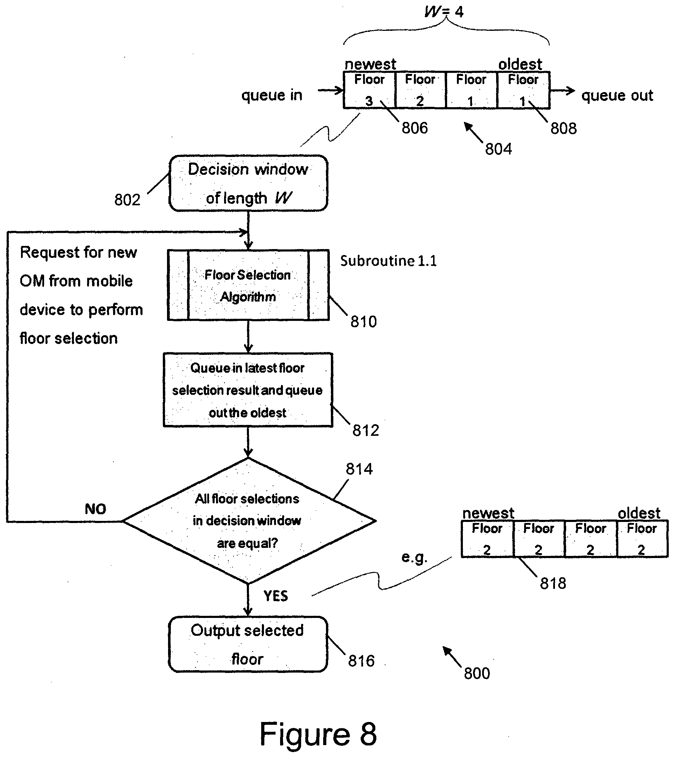

At step 704, a Floor selection subroutine is run on the database server (106 in Figure 1). When the Floor selection subroutine is run, a check on whether a Floor selection Algorithm needs to be run another time at step 706 to derive a floor selection decision is performed. If the accuracy requirements of the check are met, a final floor selection decision would be derived. If the accuracy requirements of the check are not met, the Floor selection Algorithm of step 706 needs to be run again based on another OM (e.g. 502 in Figure 5) requested from the mobile device (102 in Figure 1). Data of a floor selection decision could be just the decided floor number. Details of the Floor selection subroutine would be described later with reference to Figures 8, 9 and 10.

Each OM (e.g. 502 in Figure 5) received at step 702 is used in the Floor selection subroutine to derive a floor selection decision of the floor on which the mobile device (102 in Figure 1) is located. In the case that the accuracy requirements of the check on whether the Floor selection Algorithm at step 706 needs to be run another time are not met, the Floor selection subroutine may request for more OM (e.g. 502 in Figure 5) obtained at the position of the mobile device (102 in Figure 1) for processing to provide more accurate prediction of the floor on which the mobile device (102 in Figure 1) is located. Hence, steps 702 and 704 may be repeated several times depending on the number of requests from the Floor selection subroutine.

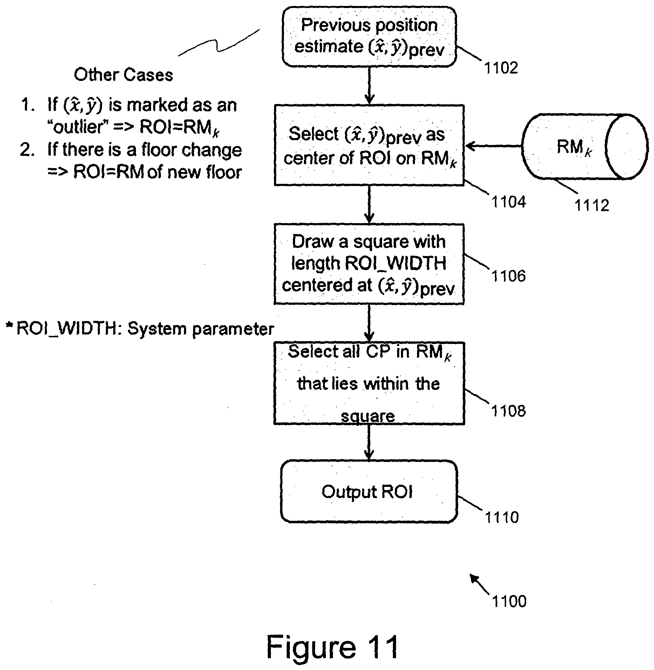

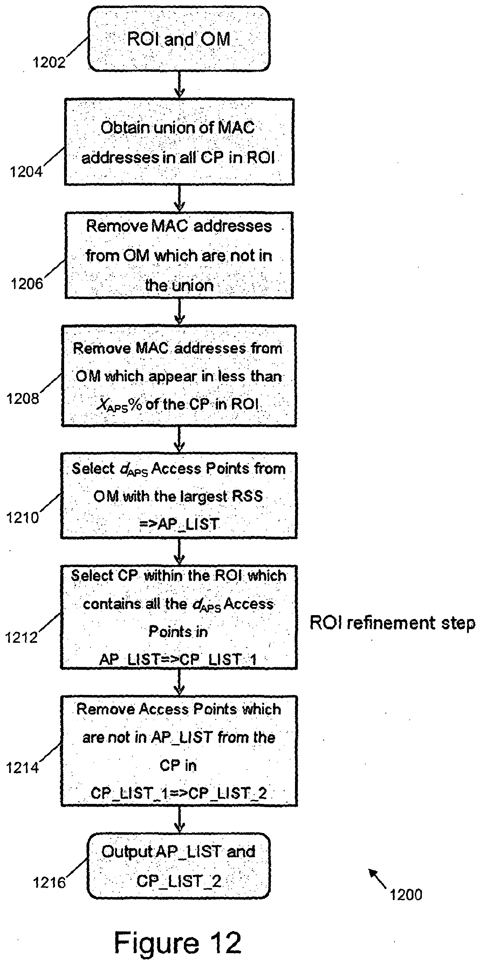

At step 708, the RM of the floor $k$ recorded in step 706 is obtained from a database of the database server (106 in Figure 1). The RM$_k$ 300 described with reference to Figure 3 of floor $k$ is, if possible, used by a Region Of Interest (ROI) selection subroutine to determine a narrowed ROI in the RM$_k$ 300 in which the mobile device (102 in Figure 1) is most likely to be located. The OM (502 in Figure 5) received at step 702 is also used in the ROI selection subroutine. Details of the ROI selection subroutine would be described later with reference to Figures 11 and 12.

Upon ROI selection completion at step 710, data of the selected ROI in which the mobile device (102 in Figure 1) is most likely located is recorded.

At step 712, access points in the OM (e.g. 502 in Figure 5) most suitable for locating the position of the mobile device (102 in Figure 1) are selected. At this step, the selected ROI is also refined, if possible, to an even narrower ROI, which the mobile device (102 in Figure 1) is most likely to be located in.

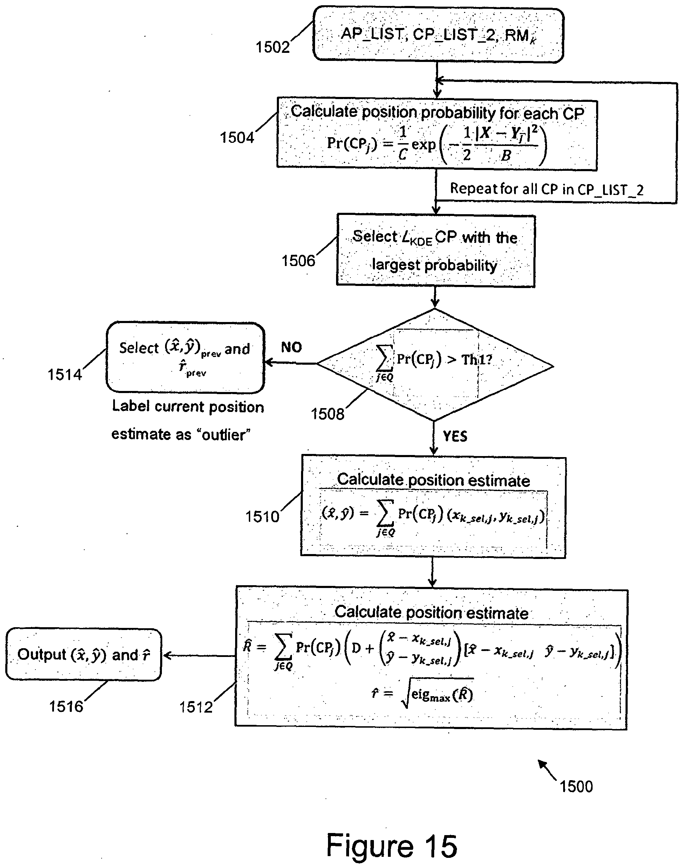

After the access points that are most suitable for locating the position of the mobile device (102 in Figure 1) are selected and the ROI is refined, if possible, at step 712, a position estimate subroutine is run at step 714 to conduct Kernel Density Estimation (KDE) for deriving a position estimate, $(x', y')$, of the mobile device (102 in Figure 1) and a reliability value, $r'$, that is a variance value indicative of the reliability of the position estimate. Details of the position estimate subroutine would be described later with reference to Figure 15.

At step 716, the reliability value, $r'$, is compared against a predetermined threshold value, Th2. If it is greater than Th2, the position estimate, $(x', y')$, of the mobile device (102 in Figure 1) is regarded as accurate and it would be recorded and used as the position estimate of the mobile device (102 in Figure 1) at step 718. If $r'$ is equal to or lesser than Th2, the main application would request for a new OM (e.g. 502 in Figure 5) to be retrieved from the mobile device (102 in Figure 1) and steps 702 to 716 would be run again using data of the new OM (e.g. 502 in Figure 5). Th2 describes the maximum acceptable variance of the the position estimate of the mobile device (102 in Figure 1). It could be in the range of 10 to 50 depending on the distance between the calibration points of the radio map of the floor k selected at step 706 and the prediction accuracy desired for estimating the position of the mobile device. The lesser the Th2 value, the more accurate it gets.

Figure 8 shows a flowchart of the Floor selection subroutine 800 described with reference to steps 704 and 706 in Figure 7. The Floor selection subroutine 800 is responsible for deciding on a final floor selection after checking a predetermined number of floor selection decisions derived based on different OMs (e.g. 502 in Figure 5) acquired for a particular position of the mobile device (102 in Figure 1). Each floor selection decision is a decision on the floor that the mobile device (102 in Figure 1) is most likely on. The predetermined number of floor selection decisions is indicated by length W of a decision window 802.

Each floor selection decision is determined or derived based on an OM (e.g. 502 in Figure 5) requested from the mobile device (102 in Figure 1). The data of the OMs (e.g. 502 in Figure 5) requested may differ from one another due to factors affecting the measurements undertaken by the mobile device (102 in Figure 1) when it is obtaining the OMs (e.g. 502 in Figure 5). For instance, one such factor may be environmental conditions affecting the WiFi reception of the mobile device (102 in Figure 1) or the WiFi service provision of the access points detectable at the position of the mobile device (102 in Figure 1). Hence, having the Floor selection subroutine 800 to make a final floor selection decision based on more than one floor selection decision for one position of the mobile device (102 in Figure 1) can help to acquire more accurate prediction of the floor that the mobile device (102 in Figure 1) is on at that position.

In the Floor selection subroutine 800, W is 4. It is appreciated that the number of W could be 1 or more depending on the extent of accuracy desired to be achieved. A graphic representation 804 in Figure 8 illustrates the concept of the decision window 802. As W is 4 in this case, the graphic representation 804 shows 4 slots arranged side by side horizontally and in series. Each slot represents a floor selection decision that is derived based on an OM requested from the mobile device (102 in Figure 1). The 4 slots are sorted from the newest decision to the oldest decision. The left most slot 806 in the representation 804 represents the newest floor selection decision and the right most slot 808 is the oldest floor selection decision. The latest floor selection decision is queued into the left most slot 806 and the oldest floor selection decision would be queued out of the right most slot 808 when the latest floor selection decision is queued in. In the representation 804, from left to right, the newest floor decision 806 shows "floor 3" as its decision, followed by "floor 2" in the next slot, "floor 1" thereafter and lastly "floor 1" in the right most slot 808.

The Floor selection subroutine 800 begins with the presence of data representing the decision window 802 in the database server (106 in Figure 1).

At step 810, the Floor Selection Algorithm described with reference to step 706 in Figure 7 is run to derive a floor selection decision. Data of OMs (e.g. 502 in Figure 5) obtained at the position of the mobile device (102 in Figure 1) and subsequently acquired by the database server (106 in Figure 1) are used in the Floor Selection Algorithm to derive the floor selection decision. Details of the Floor Selection Algorithm are described later with reference to Figure 9.

After one floor selection decision is derived from the Floor Selection Algorithm at step 810, data of the derived floor selection decision would be manipulated at step 812 in a manner such that in the graphical representation 804 of the data manipulation, the derived floor selection decision is queued into the left most slot 806 as the latest floor selection decision. At the same time, data of the oldest floor selection decision in the right most slot 808 would be queued out. In the case described for Figure 8, any queued out floor selection decision would not be considered again for determining the final floor selection decision.

Step 814 refers to the check on whether the Floor selection Algorithm needs to be run another time to derive a floor selection decision based on another OM (e.g. 502 in Figure 5) requested from the mobile device (102 in Figure 1).

More specifically, the check is performed to see if all floor selection decisions in the decision window 802, in this case, 4 of them, are equal. In other words, whether all 4 are indicating the same floor number of the subject multi-storey building. With reference to a second graphic representation 818 of the decision window 802 in Figure 8, if all 4 decisions in the decision window 802 are indicating the same floor number e.g. floor 2, requirement for selecting that floor number as the final predicted floor is fulfilled and data of the final predicted floor would be outputted and stored at step 816.

In this case, if any one of the 4 decisions in the decision window 802 is not indicating the same floor number, another OM (502 in Figure 5) would be requested from the mobile device (102 in Figure 1) for deriving a new floor selection decision. When that happens, steps 810, 812 and 814 would be repeated again. Based on the requirement set for this case, as long as all 4 decisions are not equal, the Floor selection subroutine 800 will repeat steps 810, 812 and 814 again. A predetermined number of times could be set for the Floor selection subroutine 800 to repeat steps 810, 812 and 814 before, for instance, generating a message to indicate that the floor cannot be determined. It is appreciated that less stringent requirements may be implemented. For instance, requirement for selecting a floor number as the final predicted floor may be taken to be fulfilled if 3 out of the 4 floor decisions are the same.

Derivation of each floor selection decision by the Floor Selection Algorithm (900 in Figure 9) would be described as follows with reference to Figure 9.

At step 902, an OM (e.g. 502 in Figure 5) is received by the database server (106 in Figure 1) from the mobile device (102 in Figure 1).

At step 904, an $N$ number of MAC addresses with the largest FDM value in the FDMT 602 described with reference to Figure 6 are selected from the OM (e.g. 502 in Figure 5) received at step 902. What is considered as largest FDM value is predetermined. N is a value selected based on the prediction accuracy desired for determining the floor of the position of the mobile device (102 in Figure 1). It could be in the range of, for instance, 2 to 10. With regard to the selection of the largest FDM value, if for example, the FDM value for a first $MAC_1$ equals to 5, the FDM value for a second $MAC_2$ equals to 3, and the FDM value for a third $MAC_3$ equals to 10, the third $MAC_3$ would be considered as having the largest FDM value.

At step 906, probability that one of the $N$ number of MAC addresses observed on one floor of the subject multi-storey building is calculated based on the formula as follows.

$$Pr(MAC_i \text{ on a floor } k) = KDE\_FSA(MAC_i, RSS_i, RM_k)$$

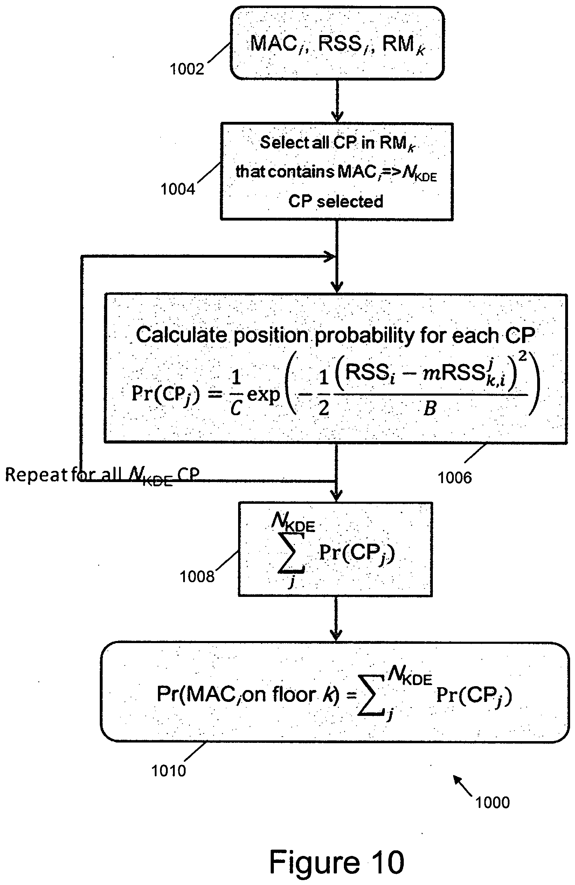

where $Pr(MAC_i$ on a floor $k)$ is the probability that the particular MAC address, $MAC_i$, is observed on floor $k$,
$MAC_i$ is a MAC address in the $N$ number of MAC addresses with the largest FDM value in the FDMT 602,
$RSS_i$ is the corresponding received signal strength of the MAC address, $MAC_i$, in the $N$ number of MAC addresses with the largest FDM value in the FDMT 602,
$i$ indicates which $MAC_i$ and corresponding $RSS_i$ in the $N$ number of MAC addresses with the largest FDM value in the FDMT 602, and
$RM_k$ is the Radio Map of the floor $k$ in the subject multi-storey building.
$KDE\_FSA(MAC_i, RSS_i, RM_k)$ is a function for $Pr(MAC_i$ on a floor $k)$ and it would be described in more detail with reference to Figure 10. It is noted that KDE_FSA is just a mathematical function expression and it can be expanded to read as "Kernel Density Estimation (KDE) _ Floor Selection Algorithm (FSA)". It is appreciated that any other mathematical function expression could also be used, e.g. $f(MAC_i, RSS_i, RM_k)$.

Step 906 is repeated for each floor of the multi-storey building to form at step 908, a vector (or also called a matrix), $VEC_i$, containing a list of all probabilities that the particular MAC address, $MAC_i$, is observed on each floor of the subject multi-storey building. The Radio Map (RM) of the building 914 containing the individual RM of each floor is used accordingly at step 906. $VEC_i$ is associated to the particular $MAC_i$. Mathematically, the $VEC_i$ is represented as follows.

$$VEC_i = \begin{bmatrix} Pr\,(MAC_i \text{ on } floor\,1) \\ Pr\,(MAC_i \text{ on } floor\,2) \\ \vdots \\ Pr\,(MAC_i \text{ on } floor\,k) \end{bmatrix}$$

Steps 906 and 908 are repeated for each of the selected $N$ number of MAC addresses.

After repeating steps 906 and 908, the $VEC_i$ of each of the $N$ number of MAC addresses is formed.

At step 910, data of the probability of all the $N$ number of MAC addresses being observed for each floor in the $VEC_i$ formed are summed together and stored in a matrix represented by a sum vector, SUM_VEC. Mathematically, SUM_VEC is represented by the formula as follows.

$$SUM\_VEC = \sum_i^N VEC_i = \begin{bmatrix} \sum_i^N Pr\ (MAC_i\ on\ floor\ 1) \\ \sum_i^N Pr\ (MAC_i\ on\ floor\ 2) \\ \vdots \\ \sum_i^N Pr\ (MAC_i\ on\ floor\ k) \end{bmatrix}$$

where

$$\sum_i^N Pr\ (MAC_i\ on\ floor\ k)$$

is the sum probability that all the respective MAC addresses are observed on floor k of the subject multi-storey building.

At step 912, the floor number with the largest sum probability in the SUM_VEC is selected. The floor number selected would then be outputted as the floor selection decision of the Floor Selection Algorithm 900. For ease of description, this selected or predicted floor number is herein given the expression, *k_sel*.

For the Floor selection routine as described, the working principle is to use the probability of observing or detecting all MAC addresses of the access points on each floor as indicators for floor selection. It is appreciated that the floor with highest probability of observing or detecting the MAC addresses of the access points on that floor is most likely the floor on which the mobile device (102 in Figure 1) is located. If the largest value of the largest sum probability is the same for two floors, one of the two floors would be randomly selected.

Calculation of KDE_FSA(MAC$_i$, RSS$_i$, RM$_k$) is described as follows with reference to a subroutine flowchart 1000 in Figure 10.

At step 1002, MAC$_i$, RSS$_i$ and RM$_k$ for the Floor Selection Algorithm 900 in Figure 9 are acquired. As described with reference to Figure 9, MAC$_i$ is a MAC address in the selected *N* number of MAC addresses with the largest FDM value in the FDMT 602 described with reference to Figure 6, RSS$_i$ is the corresponding received signal strength of the MAC address, MAC$_i$, and RM$_k$ is the Radio Map of a floor *k* in the subject multi-storey building.

At step 1004, Calibration Points (CP) containing MAC$_i$ in the RM$_k$ are selected. The number of CPs selected in this manner is indicated as $N_{KDE}$. $N_{KDE}$ is the number of CPs in the RM$_k$ that contains the specific MAC$_i$. $N_{KDE}$ is a variable that depends on, for instance, the distance between CPs and the environment where the mobile device (102 in Figure 1) is located.

At step 1006, position probability of each selected CP, Pr(CP$_j$), is calculated. The position probability refers to the probability of the position of the selected CP containing MAC$_i$ in the RM$_k$ being the position of the mobile device (102 in Figure 1) and it is derived based on the probability of a certain observed RSS value in the OM (e.g. 502 in Figure 5) being measured from the location of the selected CP in the RM$_k$. In this case, an assumption is made that the RSS values would follow a Normal (or Gaussian) Probability Distribution Function, the probability that a certain observed RSS value is taken from the specific location of the CP is calculated by the formula as follows.

$$Pr(CP_j) = \frac{1}{C} exp\left[ \frac{(-\frac{1}{2})(RSS_i - mRSS_{k,i}^j)^2}{B} \right]$$

where mRSS$^j_{k,i}$ is the mean Received Signal Strength of a selected CP$_j$ and it is calculated based on the formula described earlier with reference to step 408 of Figure 4,

RSS$_i$ is the corresponding Received Signal strength of the MAC$_i$ that is contained in the selected CP$_j$,

depending on whether *j* is affixed as subscript or superscript to the expression CP or mRSS, *j* indicates which one of the CP in the RM$_k$ containing MAC$_i$ or the corresponding mRSS of that CP,

depending on whether *i* is affixed as subscript or superscript to the expression RSS or mRSS, *i* indicates which one of the RSS or mRSS in the $RM_k$ that is associated with $MAC_i$, and

*C* and *B* are predetermined parameters.

In this case, C = $\sqrt{(2\pi)}$ i.e. approximately 2.507 and B = $\sigma^2$ where $\sigma$ is the Gaussian Kernel bandwidth value predetermined based on the environment and distance between calibration points in the $RM_k$. $\sigma$ could be in the range of 2 to 20.

While the formula for $Pr(CP_j)$ is based on a Normal (or Gaussian) Probability Distribution Function (PDF), it is appreciated that other PDFs may also be used, such as a Laplace PDF, Uniform PDF, or any other suitable user-defined PDF.

Step 1006 is repeated for all the $N_{KDE}$ number of CPs to calculate the position probability for each of the CPs.

At step 1008, all the calculated position probability of each of the $N_{KDE}$ number of CPs are summed up. This sum, $KDE\_FSA(MAC_i, RSS_i, RM_k)$, can be represented mathematically as follows.

$$KDE\_FSA(MAC_i, RSS_i, RM_k) = \sum_{j}^{N_{KDE}} Pr(CP_j)$$

It has been observed that the sum probability of all the position probability of each of the $N_{KDE}$ number of CPs i.e. $KDE\_FSA(MAC_i, RSS_i, RM_k)$ would be indicative of the probability that the particular $MAC_i$ in the selected *N* number of MAC addresses with the largest FDM value is observed on floor *k* i.e. $Pr(MAC_i$ on floor *k*). This sum probability takes into account all the calibration points in floor *k* that contains the specific $MAC_i$. Hence, at step 1010, $Pr(MAC_i$ on floor *k*) is provided with the value of $KDE\_FSA(MAC_i, RSS_i, RM_k)$. Mathematically, this is represented as follows.

$$Pr(MAC_i \text{ on floor } k) = \sum_{j}^{N_{KDE}} Pr(CP_j)$$

Figure 11 shows a flowchart 1100 of a first part of the Region Of Interest (ROI) selection subroutine described with reference to step 708 of Figure 7. The first part of the ROI selection subroutine is, if possible, used to determine a narrowed ROI in the Radio Map of the floor predicted 1112 in step 816 as described with reference to Figure 8.

If there is a previous position estimate $(x', y')_{prev}$ derived from step 712 in Figure 7, it would be used for determining a narrowed ROI in the Radio Map of the predicted floor *k_sel*, 1112. However, if there is no previous position estimate $(x', y')_{prev}$ or if the $(x', y')_{prev}$ is marked as an 'outlier', the ROI would not be narrowed and the entire Radio Map of the predicted floor *k_sel* 1112 would be selected as the ROI. An 'outlier' refers to a position estimate that is deemed to be unreliable for predicting the position of the mobile device (102 in Figure 1). In more detail, the 'outlier' refers to a position estimate having a sum position probability that is equal to or lesser than a predetermined threshold, Th1, after it has gone through a reliability check at step 714 of Figure 7 (more specifically, at step 1510 of Figure 15 that is discussed later). The sum position probability is represented by the following mathematical expression and would be elaborated later with reference to Figure 15.

$$\sum_{j \in Q} Pr(CP_j)$$

Furthermore, if there is a change in the latest predicted floor (outputted from step 912 of Figure 9) on which the mobile device (102 in Figure 1) is located when compared to the predicted floor of the previous position estimate, the Radio Map of the latest predicted floor would be selected as the ROI.

It is appreciated that for an ROI to be selected, it means that the data of all the Calibration Points in the ROI are selected.

The Region Of Interest (ROI) selection subroutine 1100 begins with step 1102. At step 1102, a previous position estimate, $(x', y')_{prev,}$ if present, of the mobile device (102 in Figure 1) that has previously been outputted from step 718 of Figure 7 is retrieved.

At step 1104, the retrieved $(x', y')_{prev}$, assuming present, is selected as centre of the ROI in the Radio Map of the predicted floor *k_sel*, $RM_{k\_sel}$ 1112. The Radio Map of the predicted floor *k_sel*, $RM_{k\_sel}$ 1112, is required for processing at this step.

Conceptually, a square with a predetermined length, ROI_WIDTH, centred at $(x', y')_{prev}$ is drawn on the Radio Map of the predicted floor $k\_sel$, $RM_{k-sel}$ 1112, at step 1106. This square essentially marks out a narrowed ROI. ROI_WIDTH is a value selected based on environmental factors and the prediction accuracy desired for the position of the mobile device (102 in Figure 1). The length, ROI_WIDTH, expressed in terms of the number of Calibration Points covered may be, for instance, 2 to 10 Calibration Points long. It is appreciated that a circle, rectangle or other shapes other than square could also be used.

At step 1108, all Calibration Points (CPs) in the Radio Map of the predicted floor $k\_sel$, $RM_{k\_sel}$ 1112, and in the square are selected.

Data of the CPs selected at step 1108 is outputted at step 1110 as the selected ROI.

Figure 12 shows a flowchart 1200 of a second part of the Region Of Interest (ROI) selection subroutine described with reference to step 708 of Figure 7. The flowchart 1200 is a continuation from the flowchart 1100 in Figure 11.

At step 1202, the selected ROI from the first part of the ROI selection subroutine represented by flowchart 1100 in Figure 11 and the OM (e.g. 502 in Figure 5) received at step 702 in Figure 7 are gathered for processing.

At step 1204, a union (in the context of the Probability Theory) of all MAC addresses in all the Calibration Points of the selected ROI is obtained. The union is basically a list of all MAC addresses that can be found in each of the Calibration Points of the selected ROI. The same MAC address found in two or more Calibration Points would not be duplicated in the list.

At step 1206, all the MAC addresses in the OM (e.g. 502 in Figure 5) that are not found in the union are removed from the OM (e.g. 502 in Figure 5). This step essentially removes all the MAC addresses of access points in the OM that is not likely to help in the prediction of the position of the mobile device (102 in Figure 1). The MAC addresses found in the CPs of the selected ROI are more trusted as they are detected in the creation of the Radio Map for the subject building that is described with reference to Figure 4. The creation of the Radio Map for the subject building can be regulated by a service provider for quality and be updated periodically to ensure that the data is trustworthy. On the other hand, data of the OM is gathered by the mobile device (102 in Figure 1) that belongs to a random user, the source of the data is thus less trustworthy.

At step 1208, MAC addresses from the OM appearing in less than $X_{APS}$% of the Calibration Points in the selected ROI are removed. This further filters the access points detected by the OM to only those that would most likely be of good help in the prediction of the position of the mobile device (102 in Figure 1). $X_{APS}$% is a value selected based on the prediction accuracy desired for the position of the mobile device (102 in Figure 1). It could be in the range of, for instance, 25-75%.

At step 1210, $d_{APS}$ number of access points, more specifically their MAC addresses, having the largest RSS values are selected from the OM. This step filters out the number of access points detected by the OM to only those with strong RSS that would be of good help in the prediction of the position of the mobile device (102 in Figure 1) compared to the access points with weaker RSS. Data of the MAC addresses of the $d_{APS}$ number of access points and their corresponding RSS values are stored and herein denoted by a variable, AP_LIST. $d_{APS}$ is a value selected based on the prediction accuracy desired for the position of the mobile device (102 in Figure 1). Its selection depends on the number of Calibration Points in the selected ROI and the acceptable computation time allocated for processing involving the $d_{APS}$ number of access points. If the $d_{APS}$ number is too high, many computations are required and the position estimation time may become unacceptable. The $d_{APS}$ number may be, for instance, 2 to 10.

Steps 1212 and 1214 are for ROI refinement. The aim is to refine or narrow the selected ROI further for better prediction of the position of the mobile device (102 in Figure 1).

Only all CPs within the selected ROI, which contains the $d_{APS}$ number of access points in the AP_LIST are selected at step 1212. Data of the CPs selected are stored and herein denoted by a variable CP_LIST_1.

At step 1214, MAC addresses of access points which are not in the AP_LIST are removed from the data of the CPs in CP_LIST_1 to arrive at a new list of CPs herein denoted by a variable CP_LIST_2. Hence, CP_LIST_2 contains CPs in the selected ROI with only MAC addresses of access points with strong RSS that are detected by the mobile device (102 in Figure 1) at the position to be predicted.

At step 1216, the AP_LIST and the CP_LIST_2 are outputted for further processing.

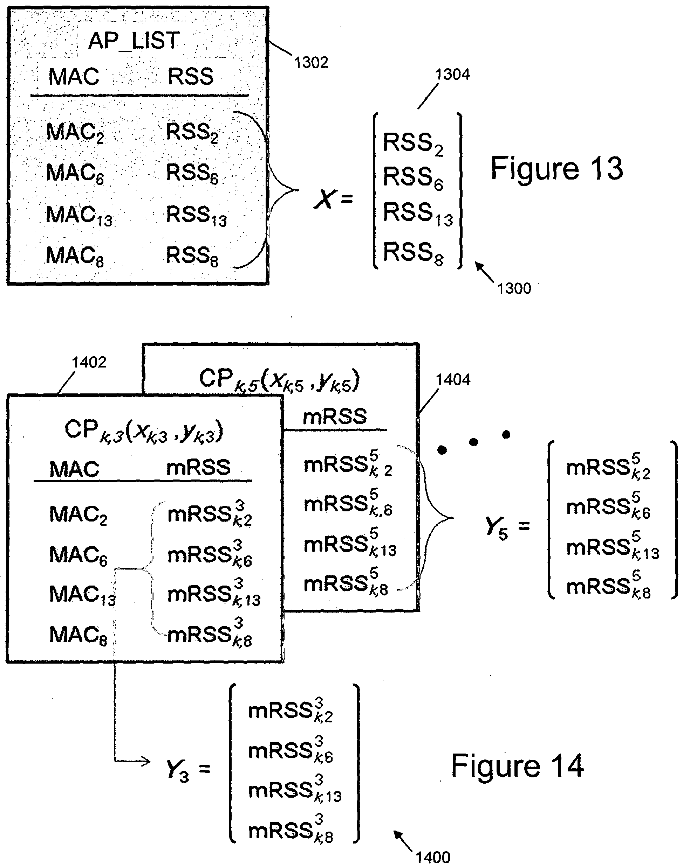

Figure 13 illustrates data contained in an AP_LIST 1300 generated in the manner described with reference to Figure 12. In Figure 13, the data is represented by a table 1302 containing MAC addresses $MAC_2$, $MAC_6$, $MAC_{13}$ and $MAC_8$ and the corresponding Received Signal Strengths $RSS_2$, $RSS_6$, $RSS_{13}$ and $RSS_8$. It is appreciated that the contents of the table 1302 are showing random samples of MAC addresses and their corresponding RSS values in the AP_LIST. The MAC addresses and the corresponding RSS values would vary depending on what is outputted as the AP_LIST at step 1216 of Figure 12. The RSS values of the MAC addresses in the AP_LIST are denoted by a vector $X$ 1304, which can be represented mathematically as follows.

$$X = \begin{bmatrix} RSS_2 \\ RSS_6 \\ RSS_{13} \\ RSS_8 \end{bmatrix}$$

Figure 14 illustrates data contained in the Calibration Points of a CP_LIST_2 1400 that is outputted at step 1216 of Figure 12. The data of two example Calibration Points, $CP_{k\_sel,3}(X_{k\_sel},3,y_{k\_sel},3)$ and $CP_{k\_sel,5}(X_{k\_sel},5,y_{k\_sel,5})$, are specifically illustrated in Figure 14. $CP_{k\_sel,3}(X_{k\_sel},3,y_{k\_sel},3)$ is represented by a first table 1402 and $CP_{k\_sel,5}(X_{k\_sel},5,y_{k\_sel},5)$ is represented by a second table 1404.

With reference to the random samples in the AP_LIST 1300 of Figure 13, the first table 1402 contains MAC addresses $MAC_2$, $MAC_6$, $MAC_{13}$ and $MAC_8$ and the respective mean Received Signal Strengths $mRSS3_{k\_sel,2}$, $mRSS3_{k\_sel,6}$, $mRSS3_{k\_sel,13}$ and $mRSS3_{k\_sel,8}$. The second table 1404 contains MAC addresses $MAC_2$, $MAC_6$, $MAC_{13}$ and $MAC_8$ and the respective mean Received Signal Strengths $mRSS5_{k\_sel,2}$, $mRSS\ _{k\_sel,6}$, $mRSS5_{k\_sel,13}$ and $mRSS5_{k\_sel,8}$. It is noted that these mRSS values corresponding to the respective MAC addresses originate from the Radio Map of the predicted floor $k\_sel$ (1112 in Figure 11). The mRSS values in $CP_{k\_sel,3}(X_{k\_sel},3,y_{k\_sel},3)$ and $CP_{k\_sel,5}(X_{k\_sel},5,y_{k\_sel},5)$ are denoted by vector $Y_3$ 1406 and $Y_5$ 1408 respectively, which can be represented mathematically as follows.

$$Y_3 = \begin{bmatrix} mRSS^3_{k_{sel},2} \\ mRSS^3_{k_{sel},6} \\ mRSS^3_{k_{sel},13} \\ mRSS^3_{k_{sel},8} \end{bmatrix} \qquad Y_5 = \begin{bmatrix} mRSS^5_{k_{sel},2} \\ mRSS^5_{k_{sel},6} \\ mRSS^5_{k_{sel},13} \\ mRSS^5_{k_{sel},8} \end{bmatrix}$$

In the expressions given for the two Calibration Points and the corresponding mRSS values, $k\_sel$ is indicative of the predicted floor (outputted from step 912 of Figure 9) of the subject building in which the mobile device (102 in Figure 1) is located, the numbers 3 and 5 denote the respective Calibration Point as listed in the CP_LIST_2 1400, and the numbers 2, 6, 13 and 8 respectively denote that the mRSS values correspond to MAC addresses $MAC_2$, $MAC_6$, $MAC_{13}$ and $MAC_8$ respectively.

Figure 15 shows a flowchart 1500 of a position estimate subroutine described with reference to step 714 of Figure 7. The position estimate subroutine basically conducts Kernel Density Estimation (KDE) for deriving a position estimate, $(\hat{x}, \hat{y})$, of the mobile device (102 in Figure 1) and a reliability value, $\hat{r}$, that is indicative of the reliability of the position estimate.

The position estimate subroutine begins with step 1502, which retrieves the AP_LIST (e.g. 1300 in Figure 13) generated in the manner described with reference to Figure 12, the CP_LIST_2 (e.g. 1400 in Figure 14) that is outputted at step 1216 of Figure 12, and the Radio Map of the predicted floor $k\_sel$ (outputted at step 912 of Figure 9), $RM_{k\_sel}$, for processing.

At step 1504, position probability of each CP in the CP_LIST_2 (e.g. 1400 in Figure 14) is calculated by the formula as follows.

$$\Pr(CP_j) = \frac{1}{C} exp \left[ \frac{\left(-\frac{1}{2}\right)(X - Y_j)^2}{B} \right]$$

where $CP_j$ indicates which CP in the CP_LIST_2 (e.g. 1400 in Figure 14),

$Y_j$ is a vector containing a list of mean Received Signal Strengths in a $CP_j$ of the CP_LIST_2 (e.g. 1400 in Figure 14), for example, $Y_3$ 1408 and $Y_5$ 1406 in Figure 14,

$X$ is a vector containing a list of corresponding Received Signal strength of all MAC addresses in the AP_LIST (e.g. 1300 in Figure 13), for example, $X$ 1304 in Figure 13,

depending on whether $j$ is affixed as subscript or superscript to the expression CP or $Y$, $j$ indicates a CP in the CP_LIST_2 (e.g. 1400 in Figure 14) or the $Y$ vector of that CP in the CP_LIST_2, and

$C$ and $B$ are predetermined parameters based on Gaussian Probability Densuty Functions. Here, the mathematical formulas of *C* and *B* are as follows.

$$C = 2\pi^{\left(\frac{d_{APS}}{2}\right)} [\det{(cov)}]^{\left(\frac{1}{2}\right)} \qquad \text{and} \qquad B = cov$$

where 'cov' is a 2x2 diagonal matrix whose diagonal element is the Gaussian Kernel bandwidth of Received Signal Strength and 'det' denotes the determinant of a square matrix.

The formula for $Pr(CP_j)$ is based on a Normal (or Gaussian) Probability Distribution Function (PDF). It is appreciated that other PDFs may also be used, such as a Laplace PDF, Uniform PDF, or any other suitable user-defined PDF.
The calculation at step 1504 repeats until position probability of all CPs in the CP_LIST_2 is derived.
At step 1506, $L_{KDE}$ number of the CPs having the largest probability is selected. This selection is to pick out the CPs in the CP_LIST_2 that can best represent the position of the mobile device (102 in Figure 1). $L_{KDE}$ is a predetermined number selected based on the distance between calibration points and the prediction accuracy desired for determining the position estimate of the mobile device (102 in Figure 1). It could be in the range of, for instance, 2 to 10.
At step 1508, a sum, SUM_LKDE, of all the selected largest position probability result of each of the $L_{KDE}$ number of CPs at step 1506 is compared with a threshold value, Th1.
Th1 describes the minimum acceptable sum probability of the position estimate of the mobile device (102 in Figure 1) within a specific Region Of Interest (ROI). It is determined based on the following factors:

    i) environmental;
    ii) distance between CPs;
    iii) number of AP used for position estimation, i.e. $d_{APS}$;
    iv) number of CP used for position estimation, i.e. $L_{KDE}$;
    v) prediction accuracy desired for position estimation.

Th1 could be in the range of $10^{-4} \sim 10^{-8}$.
SUM_LKDE is represented mathematically as follows.

$$SUM\_LKDE = \sum_{j \in Q} Pr(CP_j)$$

where Q denotes the indices of the selected $L_{KDE}$ number of CPs at step 1506. For example, the index of a selected $CP_1$ is 1.
SUM_LKDE represents how well the position of the mobile device (102 in Figure 1) can be represented by the selected $L_{KDE}$ number of CPs.
If SUM_LKDE is larger than Th1, position estimate of the mobile device (102 in Figure 1) would be calculated at step 1510.
If SUM_LKDE is equal to or less than Th1, the previously derived position vector $(\hat{x},\hat{y})_{prev}$ and previously derived position reliability value $\hat{r}_{prev}$ from the position estimate subroutine are selected at step 1514. In this case, the calculated position estimate $(\hat{x},\hat{y})$ at step 1510 would be indicated as the 'outlier' described earlier with reference to Figure 11.
At step 1510, a position estimate $(\hat{x},\hat{y})$ of the position of the mobile device (102 in Figure 1) is calculated by the following formula.

$$(\hat{x}, \hat{y}) = \sum_{j \in Q} Pr(CP_j)(x_{k,j}, y_{k,j})$$

hence,

$$\hat{x} = \sum_{j \in Q} Pr(CP_j)(x_{k\_sel,j})$$

$$\hat{y} = \sum_{j \in Q} \text{Pr}\big(\text{CP}_j\big)\big(y_{k\_sel,j}\big)$$

where $(X_{k\_sel,j},\ y_{k\_,sel,j})$ indicates the coordinates of each of the $L_{\text{KDE}}$ number of CPs, and $\text{Pr}(\text{CP}_j)$ is the position probability result in $\text{CP}_j$.

The formula basically calculates the weighted average values of the x and y coordinates of each of the $L_{\text{KDE}}$ number of CPs to arrive at the position estimate $(\hat{x},\hat{y})$. To aid understanding, for example, if $\text{Pr}(\text{CP}_1) = 0.2$, $x_{k\_sel,1} = 10$, $y_{k\_sel,1} = 20$ and $\text{Pr}(\text{CP}_2) = 0.5$, $x_{k\_sel,2} = 30$, $y_{k\_sel,2} = 40$, then the position estimate based on $\text{CP}_1$ and $\text{CP}_2$ is given by $\hat{x} = 0.2\text{x}10 + 0.5\text{x}30 = 17$ and $\hat{y} = 0.2\text{x}20 + 0.5\text{x}40 = 24$.

At step 1512, the reliability value $\hat{r}$ is derived as follows.

$$\hat{R} = \sum_{j \in Q} \text{Pr}\big(\text{CP}_j\big)\left(\mathbb{D} + \begin{pmatrix} \hat{x} - x_{k,j} \\ \hat{y} - y_{k,j} \end{pmatrix}[\hat{x} - x_{k,j}\ \ \hat{y} - y_{k,j}]\right)$$

$$\hat{r} - \sqrt{\text{eig}_{\text{max}}(\hat{R})}$$

where $\hat{R}$ is a 2x2 matrix that represents the weighted summation of all co-variance matrices of the position estimate, $D$ is a 2x2 diagonal matrix whose diagonal element is the Gaussian Kernel bandwidth of the Cartesian "x-y" coordinates, and $\text{eig}_{\text{max}}(\hat{R})$ refers to the maximum value contained the matrix, $\hat{R}$.

Matrix $\hat{R}$ describes the similarity of the position estimate $(\hat{x},\hat{y})$ to the locations of CPs that are used to calculate this position estimate. In other words, $\hat{R}$ describes how confident the position estimate $(\hat{x},\hat{y})$ is as an estimate to the position of the mobile device (102 in Figure 1). The square root of the maximum eigenvalue of $\hat{R}$, $\hat{r}$, is a mathematical representation of this confidence.

At step 1516, the calculated position estimate $(\hat{x},\ \hat{y})$ at step 1510 and the calculated $\hat{r}$ at step 1512 would be outputted respectively as the predicted position of the mobile device (102 in Figure 1) and the corresponding reliability value provided that the calculated position estimate $(\hat{x},\ \hat{y})$ is not indicated as an 'outlier'. Otherwise, the selected previously derived position vector $(\hat{x},\ \hat{y})_{\text{prev}}$ and previously derived position reliability value $\hat{r}_{\text{prev}}$ would be outputted.

For more accurate floor selection, extra steps may be taken. For example, with reference to Figure 7, when the main application first starts up, the floor selection subroutine (800 in Figure 8) executed at step 706 can be made to be performed for a predetermined number of times to determine the floor where the mobile device (102 in Figure 1) is on. Once the floor where the mobile device (102 in Figure 1) is on is determined, the decision making step 704 in Figure 7 will be made to initiate the floor selection subroutine (800 in Figure 8) if and only if:

i) an outlier is detected; and
ii) when the position estimate falls into floor switching regions.

The floor switching regions are predefined and are close to elevators, escalators, and stairs where changing floors is possible. These regions can be represented as squares, circles, and any other shape. The sizes of these regions are determined by the environment and the typical motion speed of people in the specific building. It could be in the range of $10\text{m}^2 \sim 100\text{m}^2$.

Updating of position estimate i.e. invoking of steps 708 to 718 in Figure 7 can be made to be manually activated by the user or periodically updated by the mobile device (102 in Figure 1) automatically at time intervals set based on the application of the technology concerned. For instance, for a shopper in a multi-storey mall, the time interval could be 15 seconds.

With regard to retrieving data of Observation Matrices (OMs) from the mobile device (102 in Figure 1) by the database server (106 in Figure 1), which is described earlier, it is appreciated that the database server (106 in Figure 1) could instead receive data contained in the OMs from each one of the access points observable or detectable by the mobile device (102 in Figure 1) directly. The data from the one or more access points observable or detectable by the mobile device (102 in Figure 1) could be sent to the database server (106 in Figure 1) after they receive a probing signal from the mobile device (102 in Figure 1). In more detail, each access point sends data of its MAC address and the corresponding RSS value that it could have sent to the mobile device (102 in Figure 1) in the previous example directly to the database server (106 in Figure 1). With all the data collected from each access points, the database server (106 in Figure 1) creates OMs with them. The OMs created by the database server (106 in Figure 1) would then be used for further processing in the various subroutines described with reference to Figure 7 to predict the floor and position estimate of the mobile device (102 in Figure 1). Advantageously, in this case, the mobile device (102 in Figure 1) is not responsible for creating any OMs and as a result it would less likely run into problems with, for instance, security or technical features preventing the mobile device from communicating with the database server (106 in Figure 1) directly.

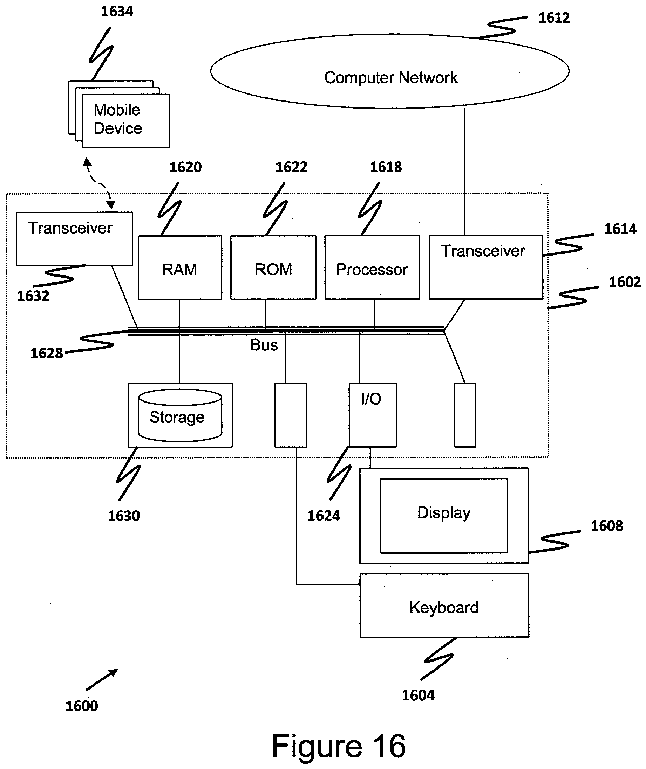

The database server 106 in Figure 1 may be a computer 1600, schematically shown in Figure 16. There may be provided software, such as one or more computer programs being executed within the computer 1600, and instructing the computer 1600 to store data, communicate and retrieve data from the mobile device 102 in Figure 1, including, for instance, the code instructions for generating a Radio Map of a subject building, the floor selection subroutine, ROI selection subroutine, position estimate subroutine described in at least Figure 7.

The computer 1600 comprises a processing unit 1602 for processing the one or more computer programs, and includes input modules such as a keyboard/keypad 1604, and/or a plurality of output devices such as a display 1608 to facilitate interaction with the computer system 1600.

The processing unit 1602 may be connected to a data storage device (including database or memory) 1630 for storing, for instance, data of the Radio Map of the subject building, Observation Matrices from the mobile device 102 in Figure 1, and all inputs, threshold values for comparison, and outputs of the various subroutines described in at least Figure 7.

The processing unit 1602 may be connected to a computer network 1612 via a suitable transceiver device 1614 (i.e. a network interface), to enable access to e.g. the Internet or other network systems such as a wired Local Area Network (LAN) or Wide Area Network (WAN). The processing unit 1602 may also be connected to one or more external wireless communication enabled devices 1634 (e.g. the mobile device 102 in Figure 1) via a suitable wireless transceiver device 1632 including a WiFi transceiver, a Mobile telecommunication transceiver suitable for Global System for Mobile Communication (GSM), 3G, 3.5G, 4G telecommunication systems, and the like.

The processing unit 1602 in the example includes a processor 1618, Memories such as a Random Access Memory (RAM) 1620 and a Read Only Memory (ROM) 1622. The processing unit 1602 also includes a number of Input/Output (I/O) interfaces, for example I/O interface 1624 to the display 1608, and I/O interface 1626 to the keyboard 1604.

The components of the processing unit 1602 typically communicate via an interconnected bus 1628 and in a manner known to the person skilled in the relevant art.

The computer programs may further include one or more software applications for e.g. internet accessibility, operating the computer system 1600 (i.e. operating system), network security, file accessibility, database management, which are applications typically equipped on a desktop or portable computer. The computer programs may be supplied to the user of the computer system 1600 encoded on a data storage medium such as a CD, DVD, on a flash memory carrier or a Hard Disk Drive. Such application programs may also be downloaded from the computer network 1612. The application programs are read and controlled in its execution by the processor 1618. Intermediate storage of program data may be accomplished using RAM 1620.

Furthermore, one or more of the steps of the computer programs may be performed in parallel rather than sequentially. One or more of the computer programs may be stored on any computer readable medium. The computer readable medium may include storage devices such as magnetic or optical disks, memory chips, or other storage devices suitable for interfacing with a general purpose computer. The computer readable medium may also include a hard-wired medium such as exemplified in the Internet system, or wireless medium such as exemplified in the Wireless LAN (WLAN) system. The computer program when loaded and executed on such a general-purpose computer effectively results in an apparatus that implements the steps of the computing processes and methods in examples herein described.

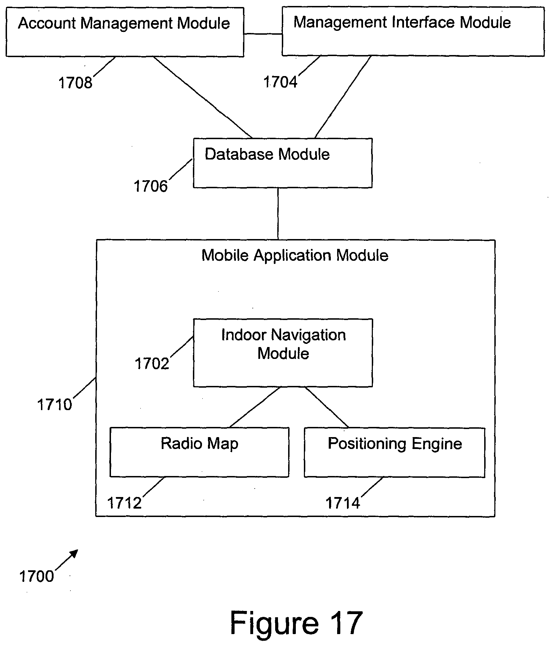

With reference to Figure 17, the generic components of the system 100 in Figure 1 (expressed as 1700 in Figure 17) may be classified into 5 modules, namely Indoor Navigation Module 1702, Management Interface Module 1704, Database Module 1706, Account Management Module 1708 and Mobile Application Module 1710.

The 5 modules are generic in nature and can be accommodated to different applications through software programming.

The Indoor Navigation Module 1702 resides in the Mobile Application Module 1710 which is downloaded into users' mobile devices in the form of a mobile application. The Mobile Application Module 1710 provides the graphical interface on the mobile device through which the user utilizes the indoor navigation service or reports his/her current position for tracking purposes. More specific examples of the users' mobile devices would be smartphones with the following operating systems, iOS, Android and Symbian operating systems. These commercial off-the-shelf smartphones are not only widely available and user friendly, their multimedia capabilities also mean that useful features can be incorporated into the indoor positioning platform, such as pushing relevant information to the mobile device at specified locations or pushing location-specific awareness promoting advertisements to the mobile devices of users.

By implementing the indoor positioning technology in a mobile application which may be freely downloaded to common mobile devices, which many people would own one, the technology would be advantageously incorporated into the daily lives of the people. Such is analogous to how Global Positioning System (GPS) became a staple function in modern mobile phones. Instead of a customised and specialized tag that is used in most current solutions for tracking people and objects, with the system 1700, people and objects could be tracked by making use of existing WiFi networks found indoors in many modern buildings.

Every user will be able to create a personal online account which is handled by the Account Management module 1708. Through the online account, a system administrator and a user are able to configure personal profiles and preferences. Once logged in, the location of the user can be updated in real-time to the Database Module 1706. Depending on the configuration at the Management Interface Module 1704, real-time locations stored in the Database Module 1706 can be pushed to or pulled by other users.

The Management Interface Module 1704 is the central controller of all information. It will be able to retrieve real-time location updates from the Database Module 1706 and visually map the instantaneous locations of all users. Through this module, the system administrator is able to decide on other data or information that is to be pushed or pulled from specific users at a particular time and location.

The Indoor Navigation Module 1702 consists of a radio map 1712 of a subject multi-storey building, a positioning engine 1714 and a navigation engine. In providing navigational capabilities, the most important and also the most challenging task is to determine the current position of the user. There are a number of techniques for outdoor positioning using radio frequency (RF) waveforms, such as time-of-arrival (TOA), time-difference-of-arrival (TDOA), and path loss determination. TOA and TDOA are often used in proprietary wireless positioning systems with dedicated hardware, such as the GPS, to provide highly accurate positioning. However, they are not suitable for indoor environment due to user inconvenience [e.g. it is inconvenient to carry a Radio Frequency Identification (RFID) tag], system complexity (e.g. requirement of sophisticated wireless system equipment), cost and inaccuracy (e.g. GPS can be relatively inaccurate frequently).

In system 1700, existing WiFi networks are tapped on for positioning without additional dedicated hardware of the proprietary wireless positioning systems and a path loss determination method is used.

The path loss determination method is based on a fundamental physical phenomenon where attenuation of RF power increases with distance according to a certain path loss model. In other words, if the transmit power is known and the RF power is measured at the receiver, the difference between the received and transmit power will provide end-to-end channel attenuation. Presuming that the path loss model is known, with the measured channel attenuation, the distance between transmitter and receiver can be calculated. Now, if a user is able to receive RF signals from a number of WiFi access points and measure each of the channel attenuations, the user will be able to determine his/her current position through triangulation.

In reality however, the path loss model cannot be accurately estimated as it depends heavily on variables such as the structure of the building, placement of furniture and human traffic conditions. To overcome this problem, in system 1700, an "RF fingerprinting" (this refers to the construction of a Radio Map for the subject building described earlier) of the whole environment (i.e. each floor of the subject building) is performed. Firstly, the environment is divided into grids containing numerous anchor points (or calibration points), where the distance between each neighbouring anchor point is, for instance, 2 m. A calibration receiver is then successively placed at each anchor point where it will measure the received signal strength (RSS) from surrounding WiFi access points, tag a vector consisting of data of the RSS to the particular anchor point and the MAC addresses of the access points, and save the information in a database. After going through all the anchor points, this database will form the radio map of the environment. Thus, the radio map gives one-to-one mapping between the received signal strengths from certain access points (identified by their MAC addresses) by the mobile device and the position within the environment.

The radio map is then utilized by the positioning engine 1714 to determine the building floor and the position on the floor of any arbitrary user through a wirelessly linked user device. Presuming there is a user in the environment attempting to determine his/her position using his/her mobile device, the mobile device will firstly measure the RSS from all surrounding WiFi access points within range and search the radio map for the RSS vector that is closest to the measured RSS vector. The positioning engine 1714 will then select the position of the closest RSS vector in the radio map as an estimate of the user's position. The RSS vectors could be the vectors containing the mean RSS in the CPs of the CP_LIST_2. For example, $Y_3$ 1408 and $Y_5$ 1406 in Figure 14.

Although the radio map is to provide a one-to-one deterministic mapping between the position and the measurement result, due to human traffic and environmental changes (such as movement of furniture), this mapping becomes "noisy" and the relationship between position and measurement result becomes a probabilistic one. Hence, a channel variation model is used here to determine probabilistic relationship between the measured RSS vector and the true position. This model will capture the deviation of the measured RSS vector from that in the radio map, according to the time and day. The channel variation model refers to the Gaussian Probability Density Function (e.g. the formulas applied at step 1006 in Figure 10 and at step 1504 in Figure 15). It is appreciated that other types of PDFs may also be used, e.g. Laplace PDF, Uniform PDF and the like.

An accurate and robust channel variation model could be created by making measurements at different locations and times of the day, and correlating them with the corresponding human traffic conditions onsite. Once the position of a user is accurately determined, navigation services can be provided by searching for the nearest route between the user and the destination. This will be handled by the navigation engine. Suitable route finding algorithms are used at the navigation engine.

Advantageously, the system 1700 achieves indoor positioning by tapping on existing WiFi access points which are already deployed in the buildings for wireless data services. Hence, a dedicated WiFi access point deployment plan, direct control over the WiFi network, nor any dedicated infrastructure for these purposes are not required.

Furthermore, the system 1700 can advantageously be configured to push relevant information and data to the right user, at the right time, and at the right place. This intelligent selectivity will allow organizations to better manage their staff and information sharing.

It is also important in mobile location awareness marketing as it prevents a marketing overload which will, in the long run, cause users to turn away from the platform altogether. This accuracy in marketing is an improvement from current mobile marketing platforms, like iAd™ from Apple, which pushes advertisements through mobile apps without filtering. Another group of mobile apps, such as Go! Shopping™, Sg Malls™ and Point Inside™, only provide maps and directory services without indoor positioning capabilities to determine building floor and position on the building floor.

In a hospital, it would be critical to keep track of where all the key medical staff and important medical equipment are at any point of time. Any time wasted in searching for the right person or equipment will seriously erode the survival probability of the patient. If the system 1700 is deployed in the hospital, it will be able to keep track of all equipment, personnel, medical staff and even patients. Through the Management Interface Module 1704, a system manager will be able to visualize the locations of all people and objects that are being tracked. In an emergency, the manager will be able to dispatch the nearest medical staff and equipment to attend to the patient.

The system 1700 can also be used as a productivity tool to improve workflows and processes as the system is able to measure key performance metrics like average response time, bed utilization rate, etc. If, for instance, a restaurant owner still has a few empty tables during lunchtime on a busy Saturday afternoon and he/she wants to fill up the restaurant to maximize revenue for the day. With the system 1700, he/she is able to push out promotions instantaneously to shoppers in the vicinity of the restaurant section of the mall, and also those users who have indicated "food and beverages" as one of their selected shopping preferences. This targeted group of shoppers is the most likely to be searching for a place for lunch. Upon receiving the promotion, interested shoppers will click on the "navigate" button and the system 1700 will show them the shortest path to get to the restaurant from their current locations. Thus, the system 1700 acts as a virtual bridge that directly and accurately connects the retailers with the relevant shoppers in a timely manner.

Advantageously, with the system 1700, shoppers may no longer need to trek through the whole mega mall to search for the best deals. All the information is instantly available (i.e. pushed to their activated mobile devices) at their fingertips. Furthermore, the system 1700 taps on the existing WiFi networks in the shopping malls to provide these indoor navigation and mobile marketing services. This will reduce infrastructure costs.

One application scenario of the system 100 is as follows.

To enjoy access to advertisements made available to smartphones in a building, consumers may download a mobile application into their smartphones from an Application Store (for iPhone™ users), Android™ Market (for Android™ phone users) or equivalents. Once a consumer has downloaded the application, he or she has to create an account on a proprietary server. The consumer will be uniquely identified by his or her username and password. He or she will be asked to fill in a form which consists of his or her personal particulars, shopping preferences, hobbies, etc. The only mandatory item could be a working email address. The rest of the items/particulars in the form could be made optional. When the consumer activates the mobile application on his or her smartphone, the application is able to estimate the consumer's building floor location and position on the building floor and this information is sent back to the proprietary server through a 3G/GPRS data link. With these location information, the proprietary server is then able to push relevant advertisements to the consumer, again through the 3G/GPRS data link, according to the time, location and preferences.

An example of how a graphical user interface (GUI) of the mobile application described with reference to Figure 1 might be implemented on a smartphone is described as follows. It is appreciated that the GUI in different smartphones might be different but a few of the fundamental features will remain generally similar.

There could be the following fundamental features in the GUI.

A Functional button or an automatically activated feature for Searching: This button or feature links to a central directory where the consumer can search for specific retail outlets according to names or categories, search for specific ads from specific retail outlets, search for amenities, e.g. washrooms, Automated Teller Machine, etc.

A Functional button or an automatically activated feature for indicating what's around: This button or feature activates displaying of advertisements from outlets within a predetermined metre radius (can be user-defined) of the smartphone. Thus, this button will lead to advertisements which are displayed according to location. It is appreciated that the advertisements are not necessarily promotion of products or services, they could also contain any information intended to be shared.

A Functional button or an automatically activated feature for indicating what's happening at the present moment: This button or feature activates displaying of advertisements put up in a current time period of, for instance, in the past one hour. Thus, this button will lead to advertisements which are displayed according to time.

A Functional button or an automatically activated feature for indicating what's on when the consumer walks into a store: This button or feature may, for instance, shows advertisements provided by retailers offering product promotions to customers who physically walk into their stores.

A Functional button or an automatically activated feature for generating virtual points when the consumer walks into a store: This button or feature may reward customers who physically walk into their stores with points which can be exchanged for gifts or cash vouchers.

A Functional button or an automatically activated feature for indicating what's preferred by the consumer: This button or automatically activated feature shows advertisements from retailers who are on a preferred list defined by the consumer. When the consumer physically walks into a participating outlet, a system server will automatically push to the consumer's smartphone information specific to that outlet.

It is appreciated that other than pushing information specific to a current store that the consumer walks into, there are the following alternatives.

> i) Push to the consumer an advertisement from a competitor of the current store entered.
> ii) Push to the consumer an advertisement from a store that sells products complimentary to the current store. For example, if the consumer walks into a store selling business shirts, advertisement for another shop selling ties will be pushed to him or her.
> iii) Push to the consumer special promotions if he or she has spent X amount of time in a particular Y department (e.g. children's department) of the store, where X and Y can be pre-defined by the retailer.
> iv) Push to the consumer items in his or her personalized shopping list (which has been uploaded into a database server earlier) which can be bought from the current store.
> v) Push to the consumer credit card promotions that are applicable to the current store.

A proposed solution for the system 100 described with reference to Figure 1 may include two aspects. The first aspect is infrastructure for indoor detection, which has been described earlier with reference to Figures 1 to 17. The second aspect is location services developed to leverage on the detection capabilities of the system 100.

The second aspect may include four features as follows.

Way Finding Services:

Navigation & Routing - Provide a simple and convenient service to help shoppers triangulate their location in relation to the mail and assist shoppers in navigating their way within the mall.

Car Finder - Shoppers no longer need to worry about where they parked their cars. A Car Finder service automatically logs a nearest entrance/exit door from where the car was parked allowing the mobile application to guide the shopper back to the car.

Footfall Analytics:

Merchants are able to objectively evaluate the effectiveness of their marketing campaigns, the new store design/layout and quantitatively correlate to sales revenue. Through real-time monitoring of in-mall shopper's movements, mall owners can determine shopper's behaviour, movement patterns and popular routes through footfall analytics. The analytics platform will allow the mall-owner cloud access to real-time analytics information and reports, enabling a quick overview of the situation on the ground for high-level strategic decisions. Management can also analyse human traffic and footfall analytics reports to optimize rental yield.

Location-Based Advertising:

Real-time, shop level push advertising - Leveraging on indoor detection of shoppers and their profiles, the mobile application can intelligently push context-based advertising materials according to the shopper's exact location (5~10m). Merchants can create and run location-based advertsing campaigns to targeted shoppers enabling real-time intervention to increase sales.

Social Networking:

Family and Friend Finder - Riding on the popularity of social media, the mobile application will enable shoppers to share their real-time location with selected friends and family members. Such a feature will help facilitate the meeting of friends and also help families to track their children and grandparents.

A method covered by the description of figures 1 to 17 may be described in another manner as follows.

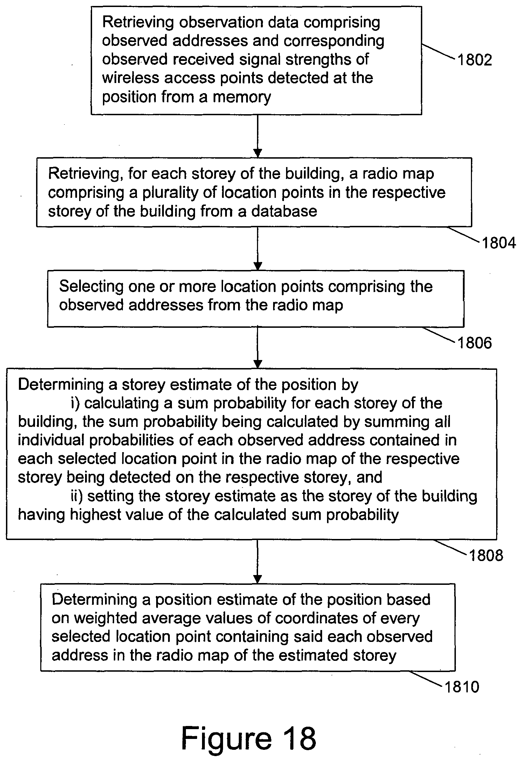

With reference to Figure 18, there is flowchart 1800 illustrating a method for determining location information of a position in a multi-storey building that comprises the following steps.

At step 1802, retrieving observation data comprising observed addresses and corresponding observed received signal strengths of wireless access points detected at the position from a memory (For example, this relates to steps 702 in Figure 7, 902 in Figure 9 and 1202 in Figure 12).

At step 1804, retrieving, for each storey of the building, a radio map (For example, 412 in Figure 4) comprising a plurality of location points in the respective storey of the building from a database, each location point comprising addresses and corresponding mean received signal strengths of wireless access points detected at the location point and coordinates of the location point (For example, this relates to steps 708 in Figure 7, 1002 in Figure 10, 1112 in Figure 11 and 1502 in figure 15).

At step 1806, selecting one or more location points comprising the observed addresses from the radio map (For example, this relates to step 1004 in Figure 10).

At step 1808, determining a storey estimate of the position by calculating a sum probability for each storey of the building, the sum probability being calculated by summing all individual probabilities of each observed address contained in each selected location point in the radio map of the respective storey being detected on the respective storey, and setting the storey estimate as the storey of the building having highest value of the calculated sum probability, wherein each of said individual probabilities is calculated based on the corresponding observed received signal strength of said each observed address in said each selected location point and the corresponding mean received signal strength in said each selected location point containing said each observed address (For example, this relates to the steps in Figures 9 and 10).

The method may further comprise at step 1810, determining a position estimate of the position based on weighted average values of coordinates of every selected location point containing said each observed address in the radio map of the estimated storey (For example, this relates to the steps in Figure 15).

The selected one or more location points may be selected from a filtered region of interest in the radio map in the step of selecting one or more location points comprising the observed addresses from the radio map (For example, this relates to the creation of CP_LIST_1 described with reference to 1212 in Figure 12).

The method may further comprise extracting a number of observed addresses with corresponding received signal strengths above a predetermined value (For example, this relates to the creation of AP_LIST described with reference to 1210 in Figure 12).

The observed addresses that are not extracted may be removed from the selected one or more location points (For example, this relates to the creation of CP_LIST_2 described with reference to 1214 in Figure 12).

The region of interest in the radio map may be filtered based on vicinity of a previous position in a multi-storey building (For example, this relates to steps 1102 and 1104 in Figure 11).

The step of determining a storey estimate of the position may comprise the following steps.

Firstly, calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address, and secondly, calculating the first value for each one of the selected location points (For example, this relates to step 1006 in Figure 10).

Thirdly, summing up first values calculated for the selected location points in the radio map of one storey, wherein said selected location points all contain a common observed address, to get a second value and fourthly, calculating the second value for every observed address that is common (For example, this relates to step 1008 in Figure 10).

Fifthly, summing up second values calculated for each storey of the building to get a third value (For example, step 910 in Figure 9) and sixthly, selecting the largest third value as the storey estimate (For example, this relates to step 912 in Figure 9).

The method may further comprise selecting the observed addresses with variance of detected received signal strengths that is beyond a predetermined variance from the radio map of each storey in the building and in the step of selecting one or more location points comprising the observed addresses from the radio map, selecting the one or more location points comprising the selected observed addresses with variance of detected received signal strengths that is beyond the predetermined variance (For example, this relates to step 904 in Figure 9).

The method may further comprise receiving observation data wirelessly from a mobile device located at the position in the building, the observation data comprising observed addresses and corresponding observed received signal strengths of wireless access points detected by the mobile device at the position (For example, step 902 and covering the case where the method is performed by a server such as the database server 106 in Figure 1).

The method may further comprise detecting observation data at the position, the observation data comprising observed addresses and corresponding observed received signal strengths of wireless access points detected [For example, step 902 and covering the case where the method is performed by a mobile device (For example, 102 in Figure 1) and also the case where the mobile device (For example, 102 in Figure 1) is acting as a server like, for instance, database server 106 in Figure 1.

The method may further comprise repeating said step of determining the storey estimate a predetermined number of times based on more than one observation data to collect more than one preliminary storey estimate and selecting as the storey estimate the same storey having the largest third value in the predetermined number of times (For example, this relates to the steps in Figure 8).

An apparatus covered by the description of figures 1 to 17 may be described in another manner as follows.

An apparatus for determining location information of a position in a multi-storey building that comprises the following components.

Firstly, a memory [For example, a memory (flash memory, hard disc drive, and the like) residing in the mobile device 102 in Figure 1, RAM 1620 in Figure 20 and data storage 1630 in Figure 16] for storing observation data comprising observed addresses and corresponding observed received signal strengths of wireless access points detected at the position (For example, step 902 in Figure 9).

Secondly, a database (For example, 1630 in Figure 16) for storing, for each storey of the building, a radio map (For example, 412 in Figure 4) of a plurality of location points in the respective storey of the building, each location point comprising addresses and mean corresponding received signal strengths of wireless access points detected at the location point and coordinates of the location point (For example, this relates to steps 708 in Figure 7, 1002 in Figure 10, 1112 in Figure 11 and 1502 in Figure 15).

Thirdly, a processing unit (For example, 1602 in Figure 16) for selecting one or more location points comprising the observed addresses from the radio map (For example, this relates to step 1004 in Figure 10).

The processing unit (For example, 1602 in Figure 16) may be configured for determining a storey estimate of the position by calculating a sum probability for each storey of the building, the sum probability being calculated by summing all individual probabilities of each observed address contained in each selected location point in the radio map of the respective storey being detected on the respective storey, and setting the storey estimate as the storey of the building having highest value of the calculated sum probability, wherein each of said individual probabilities is calculated based on the corresponding observed received signal strength of said each observed address in said each selected location point and the corresponding mean received signal strength in said each selected location point containing said each observed address (For example, this relates to the steps in Figures 9 and 10).

The processing unit (For example, 1602 in Figure 16) may be further configured for determining a position estimate of the position based on weighted average values of coordinates of every selected location point containing said each observed address in the radio map of the estimated storey (For example, this relates to the steps in Figure 15).

The selected one or more location points may be selected from a filtered region of interest in the radio map in the step of selecting one or more location points comprising the observed addresses from the radio map (For example, this relates to the creation of CP_LIST_1).

The processing unit (For example, 1602 in Figure 16) may be further configured for extracting a number of observed addresses with corresponding received signal strengths above a predetermined value (For example, this relates to the creation of AP_LIST).

The observed addresses that are not extracted may be removed from the selected one or more location points (For example, this relates to the creation of CP_LIST_2).

The region of interest in the radio map (For example, 412 in Figure 4) may be filtered based on vicinity of a previous position in a multi-storey building (For example, this relates to steps 1102 and 1104).

The step of determining a storey estimate of the position may comprise the steps as follows.

The step of determining a storey estimate of the position may comprise the following steps.

Firstly, calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address, and secondly, calculating the first value for each one of the selected location points (For example, this relates to step 1006 in Figure 10).

Thirdly, summing up first values calculated for the selected location points in the radio map of one storey, wherein said selected location points all contain a common observed address, to get a second value and fourthly, calculating the second value for every observed address that is common (For example, this relates to step 1008 in Figure 10).

Fifthly, summing up second values calculated for each storey of the building to get a third value (For example, this relates to step 910 in Figure 9) and sixthly, selecting the largest third value as the storey estimate (For example, this relates to step 912 in Figure 9).

The processing unit (For example, 1602 in Figure 16) may be further configured for selecting the observed addresses with variance of detected received signal strengths that is beyond a predetermined variance from the radio map of each storey in the building and in the step of selecting one or more location points comprising the observed addresses from the radio map, selecting the one or more location points comprising the selected observed addresses with variance of detected received signal strengths that is beyond the predetermined variance (For example, this relates to step 904 in Figure 9).

The apparatus may comprise a receiver (For example, 1632 in Figure 16) for receiving the observation data wirelessly from a mobile device located at the position in the building i.e. the apparatus may be a server (For example, database server 106 in Figure 1).

The apparatus may comprise a detector (For example, 1632 in Figure 16) for detecting the observation data from the position i.e. the apparatus may be a mobile device (For example, 102 in Figure 1) and also the case where the mobile device (For example, 102 in Figure 1) is acting as a server like, for instance, database server 106 in Figure 1.

The processing unit (For example, 1602 in Figure 16) may be further configured for repeating said step of determining the storey estimate a predetermined number of times based on more than one observation data to collect more than one preliminary storey estimate; and selecting as the storey estimate the same storey having the largest third value in the predetermined number of times (For example, this relates to the steps in Figure 8).

Many modifications and other examples can be made to the method and apparatus for determining location information of a position in a multi-storey building by those skilled in the art having the understanding of the above described disclosure together with the drawings. Therefore, it is to be understood that the method and apparatus for determining location information of a position in a multi-storey building is not to be limited to the above description contained herein only, and that possible modifications are to be included in the claims of the disclosure.

**Claims**

1. A method for determining location information of a position in a multi-storey building, the method comprising:

   retrieving observation data comprising observed addresses and corresponding observed received signal strengths of wireless access points detected at the position from a memory (702, 902, 1202, 1802);

   retrieving, for each storey of the building, a radio map (412) comprising a plurality of location points in the respective storey of the building from a database, each location point comprising addresses and corresponding mean received signal strengths of wireless access points detected at the location point and coordinates of the location point (708, 1002, 1112, 1502, 1804);

   selecting one or more location points comprising the observed addresses from the radio map (1004);

   the method **characterized in that** it further comprises:

   determining a storey estimate of the position (1808, 900, 1000) by
   calculating a sum probability for each storey of the building, the sum probability being calculated by summing all individual probabilities of each observed address contained in each selected location point in the radio map of the respective storey being detected on the respective storey (906, 908, 910); and
   setting the storey estimate as the storey of the building having highest value of the calculated sum probability (912),

   wherein each of said individual probabilities is calculated based on the corresponding observed received signal strength of said each observed address in said each selected location point and the corresponding mean received signal strength in said each selected location point containing said each observed address.

2. The method as claimed in claim 1, the method further comprising:

   determining a position estimate of the position based on weighted average values of coordinates of every selected location point containing said each observed address in the radio map of the estimated storey (1500, 1810).

**3.** The method as claimed in claims 1 or 2, wherein said selected one or more location points are selected from a filtered region of interest in the radio map (412) in the step of selecting one or more location points comprising the observed addresses from the radio map (412) (1212), and wherein the region of interest in the radio map (412) is filtered based on vicinity of a previous position in a multi-storey building (1102, 1104).

**4.** The method as claimed in claims 1, 2 or 3, the method further comprising:

extracting a number of observed addresses with corresponding received signal strengths above a predetermined value (1210), wherein the observed addresses that are not extracted are removed from the selected one or more location points (1214).

**5.** The method as claimed in any one of the preceding claims, the step of determining a storey estimate of the position comprising:

calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address; calculating the first value for each one of the selected location points (1006); summing up first values calculated for the selected location points in the radio map of one storey, wherein said selected location points all contain a common observed address, to get a second value; and calculating the second value for every observed address that is common (1008); summing up second values calculated for each storey of the building to get a third value (910); and selecting the largest third value as the storey estimate (912), and/or selecting the observed addresses with variance of detected received signal strengths that is beyond a predetermined variance from the radio map (412) of each storey in the building; and in the step of selecting one or more location points comprising the observed addresses from the radio map (412), selecting the one or more location points comprising the selected observed addresses with variance of detected received signal strengths that is beyond the predetermined variance (904)..

**6.** The method as claimed in any one of the preceding claims, the method further comprising:

receiving observation data wirelessly from a mobile device located at the position in the building, the observation data comprising observed addresses and corresponding observed received signal strengths of wireless access points detected by the mobile device at the position (902), and/or

detecting observation data at the position, the observation data comprising observed addresses and corresponding observed received signal strengths of wireless access points detected (902).

**7.** The method as claimed in claim 5, the method further comprising:

repeating said step of determining the storey estimate a predetermined number of times based on more than one observation data to collect more than one preliminary storey estimate; and selecting as the storey estimate the same storey having the largest third value in the predetermined number of times (800).

**8.** An apparatus for determining location information of a position in a multi-storey building, the apparatus comprising:

a memory (1620, 1630) for storing observation data comprising observed addresses and corresponding observed received signal strengths of wireless access points detected at the position; a database (1630) for storing, for each storey in the building, a radio map (412) comprising a plurality of location points in the respective storey of the building, each location point comprising addresses and mean corresponding received signal strengths of wireless access points detected at the location point and coordinates of the location point; and a processing unit (1602) for selecting one or more location points comprising the observed addresses from the radio map; the apparatus **characterized in that** the processing unit (1602) being configured for

determining a storey estimate of the position by calculating a sum probability for each storey of the building, the sum probability being calculated by summing all individual probabilities of each observed address contained in each selected location point in the radio map of the respective storey being detected on the respective storey, and

setting the storey estimate as the storey of the building having highest value of the calculated sum probability,

wherein each of said individual probabilities is calculated based on the corresponding observed received signal strength of said each observed address in said each selected location point and the corresponding mean received signal strength in said each selected location point containing said each observed address.

9. The apparatus as claimed in claim 8, the processing unit (1602) being further configured for determining a position estimate of the position based on weighted average values of coordinates of every selected location point containing said each observed address in the radio map (412) of the estimated storey.

10. The apparatus as claimed in claims 8 or 9, wherein said selected one or more location points are selected from a filtered region of interest in the radio map (412) in the step of selecting one or more location points comprising the observed addresses from the radio map (412), and wherein the region of interest in the radio map (412) is filtered based on vicinity of a previous position in a multi-storey building.

11. The apparatus as claimed in claims 8, 9 or 10, the processing unit (1602) is further configured for extracting a number of observed addresses with corresponding received signal strengths above a predetermined value, wherein the observed addresses that are not extracted are removed from the selected one or more location points.

12. The apparatus as claimed in any one of claims 8 to 11, the step of determining a storey estimate of the position comprising:

calculating, using a Probability Density Function, a first value indicative of probability of a first selected location of the selected location points being the position of the mobile device, based on the corresponding observed received signal strength of a first observed address in the first selected location point and the corresponding mean received signal strength in the first selected location point containing the first observed address; calculating the first value for each one of the selected location points; summing up first values calculated for the selected location points in the radio map of one storey, wherein said selected location points all contain a common observed address, to get a second value; calculating the second value for every observed address that is common; summing up second values calculated for each storey of the building to get a third value; and selecting the largest third value as the storey estimate.

13. The apparatus as claimed in any one of claims 8 to 12, the processing unit (1602) being further configured for selecting the observed addresses with variance of detected received signal strengths that is beyond a predetermined variance from the radio map (412) of each storey in the building; and in the step of selecting one or more location points comprising the observed addresses from the radio map (412), selecting the one or more location points comprising the selected observed addresses with variance of detected received signal strengths that is beyond the predetermined variance.

14. The apparatus as claimed in any one of claims 8 to 13, the apparatus comprising:

a receiver (1632) for receiving the observation data wirelessly from a mobile device (102) located at the position in the building, and/or a detector (1632) for detecting the observation data from the position.

15. The apparatus as claimed in claim 12, the processing unit (1602) being further configured for repeating said step of determining the storey estimate a predetermined number of times based on more than one observation data to collect more than one preliminary storey estimate; and selecting as the storey estimate the same storey having the largest third value in the predetermined number of times.

**Patentansprüche**

1. Verfahren zum Bestimmen von einer Ortsinformation von einer Position in einem mehrstöckigen Gebäude, wobei das Verfahren das Folgende umfasst:

   Abrufen von Beobachtungsdaten, die beobachtete Adressen und entsprechende beobachtete empfangene Signalstärken von drahtlosen Zugangspunkten umfassen, die an der Position von einem Speicher (702, 902, 1202, 1802) detektiert werden;
   Abrufen für jedes Stockwerk des Gebäudes von einer Radiokarte (412), die eine Vielzahl von Ortspunkten in dem entsprechenden Stockwerk des Gebäudes umfasst, und zwar von einer Datenbank, wobei jeder Ortspunkt Adressen und entsprechende mittlere empfangene Signalstärken von drahtlosen Zugangspunkten, die an dem Ortspunkt detektiert werden, und Koordinaten des Ortspunkts (708, 1002, 1112, 1502, 1804) umfasst;
   Auswählen von ein oder mehreren Ortspunkten, die die beobachteten Adressen umfassen, aus der Radiokarte (1004);
   wobei das Verfahren **dadurch gekennzeichnet ist, dass** es ferner das Folgende umfasst:

   Bestimmen von einer Stockwerksschätzung von der Position (1808, 900, 1000) durch
   das Berechnen von einer Summenwahrscheinlichkeit für jedes Stockwerk des Gebäudes, wobei die Summenwahrscheinlichkeit berechnet wird, indem alle individuellen Wahrscheinlichkeiten für jede beobachtete Adresse, die in jedem ausgewählten Ortspunkt in der Radiokarte von dem entsprechenden Stockwerk enthalten ist, detektiert auf dem entsprechenden Stockwerk (906, 908, 910), aufsummiert werden; und
   Festlegen der Stockwerksschätzung als das Stockwerk von dem Gebäude, die den höchsten Wert für die berechnete Summenwahrscheinlichkeit (912) aufweist,
   wobei jede der individuellen Wahrscheinlichkeiten auf Basis der entsprechenden beobachteten empfangenen Signalstärke von jeder beobachteten Adresse in jedem ausgewählten Ortspunkt und der entsprechenden mittleren empfangenen Signalstärke in jedem ausgewählten Ortspunkt, der die jede beobachtete Adresse enthält, berechnet wird.

2. Verfahren nach Anspruch 1, wobei das Verfahren ferner das Folgende umfasst:

   Bestimmen von einer Positionsschätzung von der Position auf Basis von gewichteten Durchschnittswerten von Koordinaten von jedem ausgewählten Ortspunkt, der die jede beobachtete Adresse enthält, und zwar in der Radiokarte von dem geschätzten Stockwerk (1500, 1810).

3. Verfahren nach Anspruch 1 oder 2, wobei die ausgewählten einen oder mehreren Ortspunkte aus einer gefilterten Region von Interesse in der Radiokarte (412) in dem Schritt des Auswählens von ein oder mehreren Ortspunkten, die die beobachteten Adressen umfassen, aus der Radiokarte (412) (1212) ausgewählt werden und wobei die Region von Interesse in der Radiokarte (412) auf Basis von einer Nachbarschaft zu einer vorhergehenden Position in einem mehrstöckigen Gebäude (1102, 1104) gefiltert wird.

4. Verfahren nach Anspruch 1, 2 oder 3, wobei das Verfahren ferner das Folgende umfasst:

   Extrahieren von einer Zahl von beobachteten Adressen mit entsprechenden empfangenen Signalstärken über einem vorbestimmten Wert (1210), wobei die beobachteten Adressen, die nicht extrahiert werden, aus den ausgewählten ein oder mehreren Ortspunkten (1214) entfernt werden.

5. Verfahren nach einem der vorhergehenden Ansprüche, wobei der Schritt des Bestimmens von einer Stockwerksschätzung von der Position das Folgende umfasst:

   Berechnen, unter Verwendung einer Wahrscheinlichkeitsdichtefunktion, von einem ersten Wert, der für eine Wahrscheinlichkeit von einem ersten ausgewählten Ort von den ausgewählten Ortspunkten, die die Position des Mobilgeräts sind, bezeichnend ist, und zwar auf Basis der entsprechenden beobachteten empfangenen Signalstärke von einer ersten beobachteten Adresse in dem ersten ausgewählten Ortspunkt und der entsprechenden mittleren empfangenen Signalstärke in dem ersten ausgewählten Ortspunkt, der die erste beobachtete Adresse enthält;
   Berechnen von dem ersten Wert für jeden von den ausgewählten Ortspunkten (1006);
   Aufsummieren von ersten Werten, die für die ausgewählten Ortspunkte in der Radiokarte von einem Stockwerk berechnet werden, wobei die ausgewählten Ortspunkte alle eine gemeinsame beobachtete Adresse enthalten, um einen zweiten Wert zu erhalten; und

Berechnen des zweiten Wertes für jede beobachtete Adresse, die gemeinsam ist (1008);

Aufsummieren der zweiten Werte, die für jedes Stockwerk des Gebäudes berechnet werden, um einen dritten Wert zu erhalten (910); und

Auswählen des größten dritten Werts als die Stockwerksschätzung (912), und/oder

Auswählen der beobachteten Adressen mit einer Varianz für detektierte empfangene Signalstärken, die jenseits einer vorbestimmten Varianz liegt, aus der Radiokarte (412) von jedem Stockwerk in dem Gebäude; und in dem Schritt des Auswählens von einem oder mehreren Ortspunkten, die die beobachteten Adressen umfassen, aus der Radiokarte (412), das Auswählen von den ein oder mehreren Ortspunkten, die die ausgewählten beobachteten Adressen mit der Varianz für detektierte empfangene Signalstärken umfassen, die jenseits der vorbestimmten Varianz (904) liegt.

6. Verfahren nach einem der vorhergehenden Ansprüche, wobei das Verfahren ferner das Folgende umfasst:

drahtloses Empfangen von Beobachtungsdaten von einem Mobilgerät, das an der Position in dem Gebäude lokalisiert ist, wobei die Beobachtungsdaten die beobachteten Adressen und die entsprechenden beobachteten empfangenen Signalstärken von drahtlosen Zugangspunkten, die von dem Mobilgerät an der Position detektiert werden, umfassen (902) und/oder

Detektieren der Beobachtungsdaten an der Position, wobei die Beobachtungsdaten die beobachteten Adressen und die entsprechenden beobachteten empfangenen Signalstärken der detektierten drahtlosen Zugangspunkte umfassen (902).

7. Verfahren nach Anspruch 5, wobei das Verfahren ferner das Folgende umfasst:

Wiederholen von dem Schritt des Bestimmens der Stockwerksschätzung eine vorbestimmte Anzahl von Malen auf Basis von mehr als einer von den Beobachtungsdaten, um mehr als eine vorläufige Stockwerksschätzung zu sammeln; und

Auswählen als die Stockwerksschätzung von demselben Stockwerk, das den größten dritten Wert in der vorbestimmten Anzahl von Malen aufweist (800).

8. Apparat zum Bestimmen von Ortsinformationen von einer Position in einem mehrstöckigen Gebäude, wobei der Apparat das Folgende umfasst:

einen Speicher (1620, 1630) zum Speichern der Beobachtungsdaten, die beobachtete Adressen und entsprechende beobachtete empfangene Signalstärken der drahtlosen Zugangspunkte, die an der Position detektiert werden, umfassen;

eine Datenbank (1630) zum Speichern, und zwar für jedes Stockwerk in dem Gebäude, von einer Radiokarte (412), die eine Vielzahl von Ortspunkten in dem entsprechenden Stockwerk des Gebäudes umfasst, wobei jeder Ortspunkt Adressen und mittlere entsprechende empfangene Signalstärken von drahtlosen Zugangspunkten, die an dem Ortspunkt detektiert werden, und Koordinaten für den Ortspunkt umfasst; und

eine Verarbeitungseinheit (1602) zum Auswählen von ein oder mehreren Ortspunkten, die die beobachteten Adressen umfassen, aus der Radiokarte;

wobei der Apparat **dadurch gekennzeichnet ist, dass**

die Verarbeitungseinheit (1602) konfiguriert ist zum

Bestimmen von einer Stockwerksschätzung von der Position durch das Berechnen von einer Summenwahrscheinlichkeit für jedes Stockwerk des Gebäudes, wobei die Summenwahrscheinlichkeit berechnet wird, indem alle individuellen Wahrscheinlichkeiten für jede beobachtete Adresse, die in jedem ausgewählten Ortspunkt in der Radiokarte von dem entsprechenden Stockwerk enthalten ist, detektiert auf dem entsprechenden Stockwerk (906, 908, 910), aufsummiert werden, und

Festlegen der Stockwerksschätzung als das Stockwerk von dem Gebäude, die den höchsten Wert für die berechnete Summenwahrscheinlichkeit aufweist,

wobei jede der individuellen Wahrscheinlichkeiten auf Basis der entsprechenden beobachteten empfangenen Signalstärke von jeder beobachteten Adresse in jedem ausgewählten Ortspunkt und der entsprechenden mittleren empfangenen Signalstärke in jedem ausgewählten Ortspunkt, der die jede beobachtete Adresse enthält, berechnet wird.

9. Apparat nach Anspruch 8, wobei die Verarbeitungseinheit (1602) ferner konfiguriert ist zum

Bestimmen von einer Positionsschätzung von der Position auf Basis von gewichteten Durchschnittswerten von Koordinaten von jedem ausgewählten Ortspunkt, der die jede beobachtete Adresse enthält, in der Radiokarte (412) von dem geschätzten Stockwerk.

10. Apparat nach Anspruch 8 oder 9, wobei die ausgewählten einen oder mehreren Ortspunkte aus einer gefilterten Region von Interesse in der Radiokarte (412) in dem Schritt des Auswählens von ein oder mehreren Ortspunkten, die die beobachteten Adressen umfassen, aus der Radiokarte (412) ausgewählt werden und wobei die Region von Interesse in der Radiokarte (412) auf Basis von einer Nachbarschaft zu einer vorhergehenden Position in einem mehrstöckigen Gebäude gefiltert wird.

11. Apparat nach Anspruch 8, 9 oder 10, wobei die Verarbeitungseinheit (1602) ferner konfiguriert ist zum Extrahieren von einer Zahl von beobachteten Adressen mit entsprechenden empfangenen Signalstärken über einem vorbestimmten Wert, wobei die beobachteten Adressen, die nicht extrahiert werden, aus den ausgewählten ein oder mehreren Ortspunkten entfernt werden.

12. Apparat nach einem der Ansprüche 8 bis 11, wobei der Schritt des Bestimmens von einer Stockwerksschätzung der Position das Folgende umfasst:

Berechnen, unter Verwendung einer Wahrscheinlichkeitsdichtefunktion, von einem ersten Wert, der für eine Wahrscheinlichkeit von einem ersten ausgewählten Ort von den ausgewählten Ortspunkten, die die Position des Mobilgeräts sind, bezeichnend ist, und zwar auf Basis der entsprechenden beobachteten empfangenen Signalstärke von einer ersten beobachteten Adresse in dem ersten ausgewählten Ortspunkt und der entsprechenden mittleren empfangenen Signalstärke in dem ersten ausgewählten Ortspunkt, der die erste beobachtete Adresse enthält;
Berechnen von dem ersten Wert für jeden von den ausgewählten Ortspunkten;
Aufsummieren von ersten Werten, die für die ausgewählten Ortspunkte in der Radiokarte von einem Stockwerk berechnet werden, wobei die ausgewählten Ortspunkte alle eine gemeinsame beobachtete Adresse enthalten, um einen zweiten Wert zu erhalten; und
Berechnen des zweiten Wertes für jede beobachtete Adresse, die gemeinsam ist;
Aufsummieren der zweiten Werte, die für jedes Stockwerk des Gebäudes berechnet werden, um einen dritten Wert zu erhalten; und
Auswählen des größten dritten Werts als die Stockwerksschätzung.

13. Apparat nach einem der Ansprüche 8 bis 12, wobei die Verarbeitungseinheit (1602) ferner konfiguriert ist zum Auswählen der beobachteten Adressen mit einer Varianz für detektierte empfangene Signalstärken, die jenseits einer vorbestimmten Varianz liegt, aus der Radiokarte (412) von jedem Stockwerk in dem Gebäude; und in dem Schritt des Auswählens von einem oder mehreren Ortspunkten, die die beobachteten Adressen umfassen, aus der Radiokarte (412), das Auswählen von den ein oder mehreren Ortspunkten, die die ausgewählten beobachteten Adressen mit der Varianz für detektierte empfangene Signalstärken umfassen, die jenseits der vorbestimmten Varianz liegt.

14. Apparat nach einem der Ansprüche 8 bis 13, wobei der Apparat das Folgende umfasst:

einen Empfänger (1632) zum drahtlosen Empfangen der Beobachtungsdaten von einem Mobilgerät (102), das an der Position in dem Gebäude lokalisiert ist, und/oder einen Detektor (1632) zum Detektieren der Beobachtungsdaten von der Position.

15. Apparat nach Anspruch 12, wobei die Verarbeitungseinheit (1602) ferner konfiguriert ist zum Wiederholen von dem Schritt des Bestimmens der Stockwerksschätzung eine vorbestimmte Anzahl von Malen auf Basis von mehr als einer von den Beobachtungsdaten, um mehr als eine vorläufige Stockwerksschätzung zu sammeln; und
Auswählen als die Stockwerksschätzung von demselben Stockwerk, das den größten dritten Wert in der vorbestimmten Anzahl von großen Malen aufweist.

**Revendications**

1. Procédé de détermination d'informations d'emplacement d'une position dans un bâtiment à multiples étages, le procédé comprenant les étapes consistant à :

retrouver des données d'observation comprenant des adresses observées et des intensités de signal reçu observées correspondantes de points d'accès sans fil détectés au niveau de la position à partir d'une mémoire (702, 902, 1202, 1802) ;

retrouver, pour chaque étage du bâtiment, une carte radio (412) comprenant une pluralité de points d'emplacement dans l'étage respectif du bâtiment à partir d'une base de données, chaque point d'emplacement comprenant des adresses et des intensités de signal reçu moyennes correspondantes de points d'accès sans fil détectés au niveau du point d'emplacement et des coordonnées du point d'emplacement (708, 1002, 1112, 1502, 1804) ;

sélectionner un ou plusieurs points d'emplacement comprenant les adresses observées à partir de la carte radio (1004) ;

le procédé étant **caractérisé en ce qu'**il comprend en outre les étapes consistant à :

déterminer une estimée d'étage de la position (1808, 900, 1000) en

calculant une probabilité somme pour chaque étage du bâtiment, la probabilité somme étant calculée en sommant toutes les probabilités individuelles de chaque adresse observée contenue dans chaque point d'emplacement sélectionné dans la carte radio de l'étage respectif qui est détecté sur l'étage respectif (906, 908, 910) ; et

établissant l'estimée d'étage comme l'étage du bâtiment ayant la plus haute valeur de la probabilité somme (912) calculée,

dans lequel chacune desdites probabilités individuelles est calculée d'après l'intensité de signal reçu observée correspondante de ladite chaque adresse observée audit chaque point d'emplacement sélectionné et l'intensité de signal reçu moyenne correspondante audit chaque point d'emplacement sélectionné contenant ladite chaque adresse observée.

2. Procédé selon la revendication 1, le procédé comprenant en outre l'étape consistant à :

déterminer une estimée de position de la position d'après des valeurs moyennes pondérées de coordonnées de chaque point d'emplacement sélectionné contenant ladite chaque adresse observée dans la carte radio de l'étage estimé (1500, 1810).

3. Procédé selon la revendication 1 ou 2, dans lequel lesdits un ou plusieurs points d'emplacement sélectionnés sont sélectionnés à partir d'une région d'intérêt filtrée dans la carte radio (412) dans l'étape consistant à sélectionner un ou plusieurs points d'emplacement comprenant les adresses observées à partir de la carte radio (412) (1212), et dans lequel

la région d'intérêt dans la carte radio (412) est filtrée d'après le voisinage d'une position précédente dans un bâtiment à multiples étages (1102, 1104).

4. Procédé selon les revendications 1, 2 ou 3, le procédé comprenant en outre l'étape consistant à :

extraire un nombre d'adresses observées avec des intensités de signal reçu correspondantes au-delà d'une valeur prédéterminée (1210), les adresses observées qui ne sont pas extraites étant éliminées des un ou plusieurs points d'emplacement (1214) sélectionnés.

5. Procédé selon l'une quelconque des revendications précédentes, l'étape de détermination d'une estimée d'étage de la position comprenant les sous-étapes consistant à :

calculer, à l'aide d'une fonction des densités de probabilité, une première valeur indicative d'une probabilité d'un premier emplacement sélectionné des points d'emplacement sélectionnés qui est la position du dispositif mobile, d'après l'intensité de signal reçu observée correspondante d'une première adresse observée au premier point d'emplacement sélectionné et l'intensité de signal reçu moyenne correspondante au premier point d'emplacement sélectionné contenant la première adresse observée ;

calculer la première valeur pour chacun des points d'emplacement (1006) sélectionnés ;

sommer des premières valeurs calculées pour les points d'emplacement sélectionnés dans la carte radio d'un étage, lesdits points d'emplacement sélectionnés contenant tous une adresse observée commune, pour obtenir une seconde valeur ; et

calculer la seconde valeur pour chaque adresse observée qui est commune (1008) ;

sommer des secondes valeurs calculées pour chaque étage du bâtiment pour obtenir une troisième valeur (910) ; et

sélectionner la plus grande troisième valeur comme l'estimée d'étage (912), et/ou

sélectionner les adresses observées avec variance d'intensités de signal reçu détectées qui est au-delà d'une variance prédéterminée à partir de la carte radio (412) de chaque étage dans le bâtiment ; et dans l'étape consistant à sélectionner un ou plusieurs points d'emplacement comprenant les adresses observées à partir de la carte radio (412), sélectionner les un ou plusieurs points d'emplacement comprenant les adresses observées sélectionnées avec une variance d'intensités de signal reçu détectées qui est au-delà de la variance prédéterminée (904).

6. Procédé selon l'une quelconque des revendications précédentes, le procédé comprenant en outre les étapes consistant à :

recevoir des données d'observation sans fil d'un dispositif mobile situé à la position dans le bâtiment, les données d'observation comprenant des adresses observées et des intensités de signal reçu observées correspondantes de points d'accès sans fil détectés par le dispositif mobile au niveau de la position (902), et/ou

détecter des données d'observation au niveau de la position, les données d'observation comprenant des adresses observées et des intensités de signal reçu observées correspondantes de points d'accès sans fil (902) détectés.

7. Procédé selon la revendication 5, le procédé comprenant en outre les étapes consistant à :

répéter ladite étape consistant à déterminer l'estimée d'étage un nombre prédéterminé de fois d'après plus d'une donnée d'observation pour collecter plus d'une estimée d'étage préliminaire ; et

sélectionner comme estimée d'étage, le même étage ayant la plus grande troisième valeur dans le nombre de fois prédéterminé (800).

8. Appareil de détermination d'information d'emplacement d'une position dans un bâtiment à multiples étages, l'appareil comprenant :

une mémoire (1620, 1630) destinée à stocker des données d'observation comprenant des adresses observées et des intensités de signal reçu observées correspondantes de points d'accès sans fil détectés au niveau de la position ;

une base de données (1630) destinée à stocker, pour chaque étage dans le bâtiment, une carte radio (412) comprenant une pluralité de points d'emplacement dans l'étage respectif du bâtiment, chaque point d'emplacement comprenant des adresses et des intensités de signal reçu correspondantes moyennes de points d'accès sans fil détectés au niveau du point d'emplacement et des coordonnées du point d'emplacement ; et

une unité de traitement (1602) destinée à sélectionner un ou plusieurs points d'emplacement comprenant les adresses observées à partir de la carte radio ;

l'appareil étant **caractérisé en ce que** l'unité de traitement (1602) étant configurée pour

déterminer une estimée d'étage de la position en calculant une probabilité somme pour chaque étage du bâtiment, la probabilité somme étant calculée en sommant toutes les probabilités individuelles de chaque adresse observée contenue à chaque point d'emplacement sélectionné dans la carte radio de l'étage respectif qui est détecté sur l'étage respectif, et

établir l'estimée d'étage comme l'étage du bâtiment ayant la plus haute valeur de la probabilité somme calculée, dans lequel chacune desdites probabilités individuelles est calculée d'après l'intensité de signal reçu observée correspondante de ladite chaque adresse observée audit chaque point d'emplacement sélectionné et l'intensité de signal reçu moyenne correspondante audit chaque point d'emplacement sélectionné contenant ladite chaque adresse observée.

9. Appareil selon la revendication 8, l'unité de traitement (1602) étant en outre configurée pour

déterminer une estimée de position de la position d'après des valeurs moyennes pondérées de coordonnées de chaque point d'emplacement sélectionné contenant ladite chaque adresse observée dans la carte radio (412) de l'étage estimé.

10. Appareil selon les revendications 8 ou 9, dans lequel lesdits un ou plusieurs points d'emplacement sélectionnés sont sélectionnés à partir d'une région d'intérêt filtrée dans la carte radio (412) dans l'étape consistant à sélectionner un ou plusieurs points d'emplacement comprenant les adresses observées à partir de la carte radio (412), et dans lequel

la région d'intérêt dans la carte radio (412) est filtrée d'après le voisinage d'une position précédente dans un bâtiment à multiples étages.

**11.** Appareil selon les revendications 8, 9 ou 10, l'unité de traitement (1602) étant en outre configurée pour

extraire un nombre d'adresses observées avec des intensités de signal reçu correspondantes au-delà d'une valeur prédéterminée, les adresses observées qui ne sont pas extraites étant éliminées des un ou plusieurs points d'emplacement sélectionnés.

**12.** Appareil selon l'une quelconque des revendications 8 à 11, l'étape consistant à déterminer une estimée d'étage de la position comprenant les sous-étapes consistant à :

calculer, à l'aide d'une fonction des densités de probabilité, une première valeur indicative d'une probabilité d'un premier emplacement sélectionné des points d'emplacement sélectionnés qui est la position du dispositif mobile, d'après l'intensité de signal reçu observée correspondante d'une première adresse observée au premier point d'emplacement sélectionné et l'intensité de signal reçu moyenne correspondante au premier point d'emplacement sélectionné contenant la première adresse observée ;
calculer la première valeur pour chacun des points d'emplacement sélectionnés ;
sommer des premières valeurs calculées pour les points d'emplacement sélectionnés dans la carte radio d'un étage, lesdits points d'emplacement sélectionnés contenant tous une adresse observée commune, pour obtenir une seconde valeur ; et
calculer la seconde valeur pour chaque adresse observée qui est commune ; sommer des secondes valeurs calculées pour chaque étage du bâtiment pour obtenir une troisième valeur ; et
sélectionner la plus grande troisième valeur comme l'estimée d'étage.

**13.** Appareil selon l'une quelconque des revendications 8 à 12, l'unité de traitement (1602) étant en outre configurée pour sélectionner les adresses observées avec variance d'intensités de signal reçu détectées qui est au-delà d'une variance prédéterminée à partir de la carte radio (412) de chaque étage dans le bâtiment ; et dans l'étape consistant à sélectionner un ou plusieurs points d'emplacement comprenant les adresses observées à partir de la carte radio (412), sélectionner les un ou plusieurs points d'emplacement comprenant les adresses observées sélectionnées avec une variance d'intensités de signal reçu détectées qui est au-delà de la variance prédéterminée.

**14.** Appareil selon l'une quelconque des revendications 8 à 13, l'appareil comprenant :

un récepteur (1632) destiné à recevoir les données d'observation sans fil à partir d'un dispositif mobile (102) situé à la position dans le bâtiment, et/ou un détecteur (1632) destiné à détecter les données d'observation à partir de la position.

**15.** Appareil selon la revendication 12, l'unité de traitement (1602) étant en outre configurée pour
répéter ladite étape consistant à déterminer l'estimée d'étage un nombre prédéterminé de fois d'après plus d'une donnée d'observation pour collecter plus d'une estimée d'étage préliminaire ; et
sélectionner comme estimée d'étage, le même étage ayant la plus grande troisième valeur dans le nombre de fois prédéterminé.

RSS Sample

Figure 1

Floor $k$     ● Calibration Point

Figure 2

Figure 3

Figure 4

**Figure 5**

**Figure 6**

Receive OM from
mobile device 702

OM 402

NO — Perform floor
selection — Decision Making 1
704

YES — Subroutine 1

Floor
Selection
706

Obtaining RM of
current floor
708

$RM_k$

300

Subroutine 2

ROI Selection
710

Subroutine 3

Access point
Selection & ROI
Refinement
712

Subroutine 4

Kernel Density
Estimation
714

NO — $r' > Th2$ — YES — Use position estimation
in application
716 718

Figure 7

Figure 8

Figure 9

$$MAC_j, RSS_j, RM_k$$

1002

Select all CP in $RM_k$
that contains $MAC_j =>N_{KDE}$
CP selected

1004

Calculate position probability for each CP

$$Pr(CP_j) = \frac{1}{C}\exp\left(-\frac{1}{2}\frac{\left(RSS_i - mRSS_{k,i}^j\right)^2}{B}\right)$$

Repeat for all $N_{KDE}$ CP

1006

$$\sum_{j}^{N_{KDE}} Pr(CP_j)$$

1008

$$Pr(MAC_j \text{ on floor } k) = \sum_{j}^{N_{KDE}} Pr(CP_j)$$

1010

1000

# Figure 10

**Other Cases**

1. If $(\hat{x}, \hat{y})$ is marked as an "outlier" => ROI=$RM_k$
2. If there is a floor change => ROI=RM of new floor

\* ROI_WIDTH: System parameter

Previous position estimate $(\hat{x}, \hat{y})_{prev}$ — 1102

Select $(\hat{x}, \hat{y})_{prev}$ as center of ROI on $RM_k$ — 1104

$RM_k$ — 1112

Draw a square with length ROI_WIDTH centered at $(\hat{x}, \hat{y})_{prev}$ — 1106

Select all CP in $RM_k$ that lies within the square — 1108

Output ROI — 1110

1100

# Figure 11

Figure 12

AP_LIST 1302

| MAC | RSS |
| --- | --- |
| $MAC_2$ | $RSS_2$ |
| $MAC_6$ | $RSS_6$ |
| $MAC_{13}$ | $RSS_{13}$ |
| $MAC_8$ | $RSS_8$ |

1304

$$X = \begin{bmatrix} RSS_2 \\ RSS_6 \\ RSS_{13} \\ RSS_8 \end{bmatrix}$$

Figure 13

1300

$CP_{k,5}(X_{k,5}, Y_{k,5})$ 1404

1402

$CP_{k,3}(X_{k,3}, Y_{k,3})$

| MAC | mRSS |
| --- | --- |
| $MAC_2$ | $mRSS^3_{k,2}$ |
| $MAC_6$ | $mRSS^3_{k,6}$ |
| $MAC_{13}$ | $mRSS^3_{k,13}$ |
| $MAC_8$ | $mRSS^3_{k,8}$ |

| mRSS |
| --- |
| $mRSS^5_{k,2}$ |
| $mRSS^5_{k,6}$ |
| $mRSS^5_{k,13}$ |
| $mRSS^5_{k,8}$ |

$$Y_5 = \begin{bmatrix} mRSS^5_{k,2} \\ mRSS^5_{k,6} \\ mRSS^5_{k,13} \\ mRSS^5_{k,8} \end{bmatrix}$$

$$Y_3 = \begin{bmatrix} mRSS^3_{k,2} \\ mRSS^3_{k,6} \\ mRSS^3_{k,13} \\ mRSS^3_{k,8} \end{bmatrix}$$

Figure 14

1400

Figure 15

**1634**

**1612**

Computer Network

Mobile
Device

**1620**    **1622**    **1618**

Transceiver

RAM    ROM    Processor    Transceiver    **1614**

**1632**    **1602**

**1628**    Bus

Storage    I/O

**1630**    **1624**    Display    **1608**

Keyboard

**1600**    **1604**

Figure 16

Figure 17

Retrieving observation data comprising
observed addresses and corresponding
observed received signal strengths of
wireless access points detected at the
position from a memory

1802

Retrieving, for each storey of the building, a radio map
comprising a plurality of location points in the respective
storey of the building from a database

1804

Selecting one or more location points comprising the
observed addresses from the radio map

1806

Determining a storey estimate of the position by
      i) calculating a sum probability for each storey of the
building, the sum probability being calculated by summing all
individual probabilities of each observed address contained in
each selected location point in the radio map of the respective
storey being detected on the respective storey, and
      ii) setting the storey estimate as the storey of the building
having highest value of the calculated sum probability

1808

Determining a position estimate of the position based
on weighted average values of coordinates of every
selected location point containing said each observed
address in the radio map of the estimated storey

1810

# Figure 18